# EUROPEAN PATENT APPLICATION

(11) **EP 3 029 620 A1**
(43) Date of publication of application: **08.06.2016**
(21) Application number: 14831723.3
(22) Date of filing: 22.07.2014
(51) Int. Cl.: G06Q 30/02, G06F 13/00, G06F 17/30, G06Q 50/10

(54) **INFORMATION PROCESSING DEVICE, INFORMATION PROCESSING METHOD, AND PROGRAM**

(30) Priority: 31.07.2013 JP 2013159564
(71) Applicant: Sony Corporation, Tokyo 108-0075 (JP)
(72) Inventor: YAMAMOTO, Noriyuki, Tokyo 108-0075 (JP); KASAMI, Yutaka, Tokyo 108-0075 (JP); TAKAMURA, Seiichi, Tokyo 108-0075 (JP); ASANO, Yasuharu, Tokyo 108-0075 (JP); SEKINO, Masashi, Tokyo 108-0075 (JP)
(74) Representative: MFG Patentanwälte Meyer-Wildhagen Meggle-Freund Gerhard PartG mbB
(86) International application number: PCT/JP2014/069275
(87) International publication number: WO 2015/016094

(57) **Abstract**

The present technology relates to an information processing apparatus, an information processing method, and a program that improve a user's degree of satisfaction in a seat or area for viewing an event. In step S102, matching between a feature of each seat assigned to a user in a target event and a feature of a user is performed. Then, a target user who is a target for recommending each seat of the target event is selected. In step S104, a recommended seat and the target event are recommended to a selected target user. The present technology can be applied to a system that performs recommendation of an event, for example.

## Description

### Technical Field

The present technology relates to an information processing apparatus, an information processing method, and a program, and particularly to an information processing apparatus, an information processing method, and a program which are preferably used in performing recommendation of a seat or area that is to be assigned to a user in an event.

### Background Art

In the past, in transportation means such as an airplane and a high-speed train and a lodging facility such as a hotel, a user can select to purchase or book a seat or a room by himself or herself, or alternatively a seller side can select and sell a seat or a room according to the intention of the seller side.

Also, in the past, in an event such as a concert, a play, and a movie, a user can select and purchase a favorite seat from among vacant seats.

Further, in the past, there has been proposed a method of digitalizing event tickets to smoothly guide users at gates of a venue (refer to, for example, Patent Literature 1).

### Citation List

### Patent Literature

Patent Literature 1: JP 2002-197224A

### Summary of Invention

### Technical Problem

However, even though a user selects a seat of an event by himself or herself, there is not necessarily a guarantee that the user is satisfied. In many cases, the user sits on a seat at which the user has a different impression from what is expected at the time of purchase, and the user gets disappointed. In the invention described in Patent Literature 1, this point is not studied particularly.

Thus, the present technology improves a user's degree of satisfaction in a seat or area assigned to a user in an event.

### Solution to Problem

According to an aspect of the present technology, there is provided an information processing apparatus including: a recommending unit configured to perform matching between a feature of a seat or area assigned to a user in an event and a feature of a user, and to select a combination of a recommended seat or area and the user.

The recommending unit may select a combination of a recommended seat or area and a user on the basis of a distance between a seat vector which is a vector that represents a feature of a seat or area and a user vector which is a vector that represents a feature of the user.

The information processing apparatus may further include a presentation control unit configured to perform control to present an arrangement of seats or areas of the event to a user in such a manner that each seat or area is distinguished on the basis of the distance between the seat vector of each seat or area and the user vector of the user, when the arrangement of seats or areas of the event is presented to the user.

The recommending unit may recommend a second seat or area for a user to which a first seat or area is assigned, the second seat or area having the seat vector whose distance to the user vector of the user is smaller than the first seat or area.

The information processing apparatus may further include: a seat vector generating unit configured to generate the seat vector of each seat or area, on the basis of metadata relevant to each seat or area; and a user vector generating unit configured to generate the user vector of each user, on the basis of metadata relevant to each user.

The information processing apparatus may further include a presentation control unit configured to control presentation of an image that simulates a sight from a seat or area that is recommended to a user.

The image may simulate how an event region which is a region at which the event is performed in a venue of the event is viewed from a seat or area that is recommended to a user, and a surrounding situation of the seat or area that is recommended to the user.

The feature of the seat or area may include a feature of a user assigned preferentially to the seat or area. The recommending unit may select a combination of a recommended seat or area and a user, on the basis of a feature of a user and a feature of a user assigned preferentially to each seat or area.

The recommending unit may further recommend a facility and seat utilized by a target user before the event or after the event, on the basis of a combination of a category that the event belongs to and a category that the target user serving as a target for recommendation belongs to.

The feature of the seat or area may include at least one of a feature relevant to how an event region which is a region at which the event is performed in a venue of the event is viewed from the seat or area, a feature relevant to how a sound is heard in the seat or area, a feature relevant to an audience surrounding the seat or area, a feature relevant to an environment of the seat or area, and a feature of a user assigned preferentially to the seat or area. The feature of the user may include at least one of an attribute of the user, a physical feature of the user, a feature relevant to a preference of the user, and a feature relevant to how the user views an event.

The information processing apparatus may further include a presentation control unit configured to classify an audience of the event into a plurality of types on the basis of at least one of attributes of the audience, physical features of the audience, features relevant to preferences of the audience, and, features relevant to how the audience views an event, and to perform control to present a distribution of the audience of audience seats of the event in a such a manner that each type is distinguished.

The information processing apparatus may further include a sales strategy setting unit capable of setting a sales strategy indicating whether or not to perform a recommendation to a user, with respect to each seat or area of the event. The recommending unit may recommend a seat or area that is set to be recommended to the user.

The sales strategy setting unit may be capable of setting different sales strategies between a case in which a cancellation occurs, a case in which there is a vacant seat even after a predetermined deadline, and other cases.

The recommending unit may further set a price of the event and a privilege to a participant of the event, and adjust content of a combination of a recommended seat or area, the price, and the privilege, on the basis of a preference degree of a user to the event.

When the event is an event that delivers a video to an environment of a user, the recommending unit may recommend a virtual seat or area that decides how an event region which is a region at which the event is performed in the video is viewed.

According to an aspect of the present technology, there is provided an information processing method of an information processing apparatus, the information processing method including a recommending step for performing matching between a feature of a seat or area assigned to a user in an event and a feature of a user, and selecting a combination of a recommended seat or area and the user.

According to an aspect of the present technology, there is provided a program for causing a computer to execute a process including: a recommending step for performing matching between a feature of a seat or area assigned to a user in an event and a feature of a user, and selecting a combination of a recommended seat or area and the user.

In one aspect of the present technology, matching is performed between a feature of a seat or area assigned to a user in an event and a feature of a user, and a combination of a recommended seat or area and a user is selected.

### Advantageous Effects of Invention

According to one aspect of the present technology, a user's degree of satisfaction in a seat or area assigned to a user in an event is improved.

### Brief Description of Drawings

[FIG. 1] FIG. 1 is a block diagram illustrating one embodiment of an information processing system to which the present technology is applied.
[FIG. 2] FIG. 2 is a diagram for describing a virtual seat.
[FIG. 3] FIG. 3 is a block diagram illustrating an exemplary configuration of a function of a recommendation system.
[FIG. 4] FIG. 4 is a flowchart for describing a seat vector generating process.
[FIG. 5] FIG. 5 is a flowchart for describing a user vector generating process.
[FIG. 6] FIG. 6 is a flowchart for describing a push-based event recommending process.
[FIG. 7] FIG. 7 is a diagram illustrating an example of a presentation method of a recommended seat.
[FIG. 8] FIG. 8 is a diagram illustrating an example of a presentation method of a recommended seat.
[FIG. 9] FIG. 9 is a diagram illustrating an example of a presentation method of a recommended seat.
[FIG. 10] FIG. 10 is a diagram for describing an example in which a user is located for each type in each area of an event venue.
[FIG. 11] FIG. 11 is a flowchart for describing a pull-based event recommending process.
[FIG. 12] FIG. 12 is a diagram for describing an example of an adjustment method of a seat, a ticket price, and a privilege.
[FIG. 13] FIG. 13 is a diagram illustrating a first example of an adjustment method of a seat, a ticket price, and a privilege.
[FIG. 14] FIG. 14 is a diagram illustrating a second example of an adjustment method of a seat, a ticket price, and a privilege.
[FIG. 15] FIG. 15 is a diagram illustrating a third example of an adjustment method of a seat, a ticket price, and a privilege.
[FIG. 16] FIG. 16 is a diagram illustrating a fourth example of an adjustment method of a seat, a ticket price, and a privilege.
[FIG. 17] FIG. 17 is a diagram for describing an overview of a recommendation process of an action plan in an event and before and after the event.
[FIG. 18] FIG. 18 is a diagram for describing an overview of a recommendation process of an action plan in an event and before and after the event.
[FIG. 19] FIG. 19 is a diagram for describing an overview of a recommendation process of an action plan in an event and before and after the event.
[FIG. 20] FIG. 20 is a flowchart for describing a pre-event and post-event desired action ranking updating process.
[FIG. 21] FIG. 21 is a diagram illustrating a classification example of an event category.
[FIG. 22] FIG. 22 is a diagram illustrating a classification example of an action category.
[FIG. 23] FIG. 23 is a diagram illustrating an example of a desired action ranking before an event and after an event.
[FIG. 24] FIG. 24 is a flowchart for describing a pre-event action plan recommending process.
[FIG. 25] FIG. 25 is a diagram illustrating an example of a pre-event desired action ranking.
[FIG. 26] FIG. 26 is a diagram illustrating an example of a data configuration of a facility DB.
[FIG. 27] FIG. 27 is a diagram illustrating an example of information presented when recommending an action plan before an event.
[FIG. 28] FIG. 28 is a flowchart for describing a post-event action plan recommending process.
[FIG. 29] FIG. 29 is a diagram illustrating an example of a post-event desired action ranking.
[FIG. 30] FIG. 30 is a diagram illustrating an example of information presented when recommending an action plan after an event.
[FIG. 31] FIG. 31 is a flowchart for describing a sales strategy process.
[FIG. 32] FIG. 32 is a diagram illustrating an exemplary data configuration of a sales strategy table.
[FIG. 33] FIG. 33 is a flowchart for describing a detail of a sales strategy executing process.
[FIG. 34] FIG. 34 is a flowchart for describing a detail of a sales strategy executing process.
[FIG. 35] FIG. 35 is a diagram illustrating an example of a screen image displayed when presenting a transition of a ticket sales situation and an audience seat sales situation.
[FIG. 36] FIG. 36 is a flowchart for describing a detail of a sales situation transition presenting process.
[FIG. 37] FIG. 37 is a diagram illustrating an example of a screen image displayed when presenting a transition of a ticket and audience seat sales situation.
[FIG. 38] FIG. 38 is a block diagram illustrating an exemplary configuration of a computer.

### Description of Embodiments

In the following, a mode for carrying out the present technology (hereinafter, referred to as an embodiment) will be described. Note that description will be made in the following order.
1. Embodiment
2. Exemplary Variant

### <1. Embodiment>

### [Exemplary Configuration of Information Processing System 11]

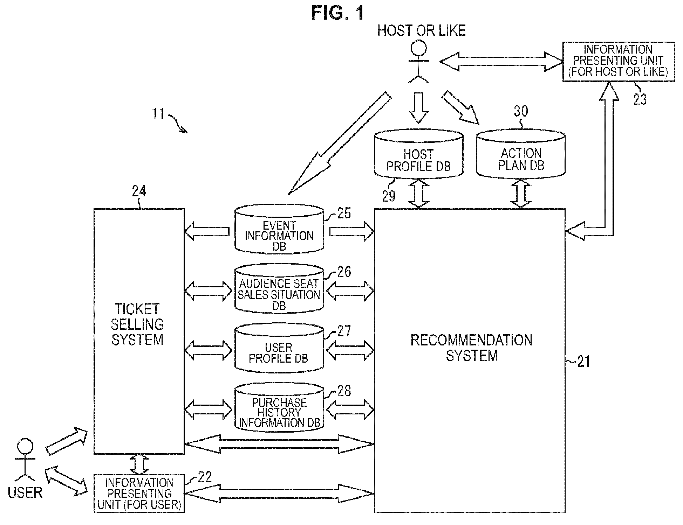

FIG. 1 is a block diagram illustrating one embodiment of an information processing system 11 to which the present technology is applied.

The information processing system 11 is a system for recommending an event and a seat, selling a ticket of an event, and the like. Also, the information processing system 11 performs recommendation of an action plan before an event or after an event.

Note that a target event that the information processing system 11 handles is an entertainment event for which a promoter or a host exists, for example. Also, the type of the target event is not limited particularly, if it is an event in which a seat or area is assigned to a user to allow the user to view the event or participate the event. For example, its target is an event performed at a predetermined venue, such as a live performance (for example, a concert, a play, a game of sport, etc.), a movie, or a lecture presentation, as well as an event performed at a specially built venue at which seats and areas are provided temporarily, such as an outdoor festival, carnival, or a firework. Also, its target is a participatory event such as a town party (a matchmaking party for male and female which is performed by a whole town), for example. Note that, in the case of the participatory event, the seat or area assigned to a user is a seat or area for the user himself or herself to join an event, in addition to seeing an event. Also, the target is an event that can be participated from a remote place, such as live viewing and moving image delivery of live performance, for example. Further, the target is not only an event in a real space, but also an event in a virtual space, such as a virtual live performance using computer graphic (hereinafter, referred to as a virtual event). Note that a price of an event may be charged or charge-free.

Also, the venue at which an event is performed is not limited particularly, if it is a venue in which a seat or area is assigned to a user. For example, a hole, an arena, a stage theater, a movie theater, a ball game field, an athletic field, a club with live music, a restaurant, an outdoor specially built venue, etc are envisaged.

Note that, in the following, a region at which an event is performed in a venue of the event (for example, a region at which a concert, a game, or the like is performed in a venue, a region at which a video is projected, a region at which a firework is displayed, etc.) is referred to as an event region. For example, a stage, a screen, a ground, a field, a court, or the like of a ball game field, a track, a rink, or the like of an athletic field are envisaged.

The information processing system 11 includes a recommendation system 21, an information presenting unit 22, an information presenting unit 23, a ticket selling system 24, an event information database (DB) 25, an audience seat sales situation database (DB) 26, a user profile database (DB) 27, a purchase history information database (DB) 28, a host profile database (DB) 29, and an action plan database (DB) 30.

As described later, the recommendation system 21 performs recommendation of an event and recommendation of an action plan before and after an event for a user, using information contained in each DB. Also, as described later, the recommendation system 21 is capable of performing not only recommendation of an event, but also recommendation of a seat of an event.

Note that the recommendation of the seat of the event is performed for each seat or for each area. For example, in the case of an event in which a seat is assigned to each user one by one, the recommendation can be performed for each seat, or alternatively the recommendation is performed for each area, by dividing audience seats into a plurality of areas. Also, for example, in the case of an event in which a seat of a user is assigned area by area as in an all-standing concert, the recommendation is performed for each area. Also, for example, in the case of an event that is dispersedly held at a plurality of venues and is provided with non-reserved seats in each venue, such as live viewing, each venue is treated as one area, and the recommendation is performed for each area (venue).

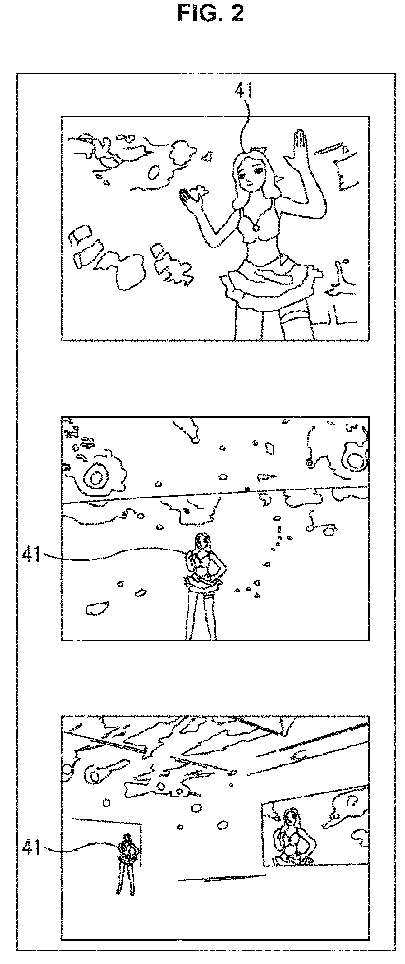

Also, in the case of an event that delivers a video to an environment of a user, without going to a venue, as in a moving image delivery of a live performance and a virtual event, a virtual seat or area (hereinafter, referred to as a virtual seat) is a recommendation target. Here, the virtual seat is created by simulating a change in how a region (an event region) at which an event is performed in a video delivered to an environment of a user is viewed, in a same way as a real seat, for example. For example, as in the upper diagram of FIG. 2, a video close to a stage to allow a cast member 41 to be viewed largely is delivered for a user of a virtual seat of a high price or grade. On the other hand, a video far from the stage is delivered to allow the cast member 41 to be viewed small, as illustrated in the middle or lower diagram, as the user is of a virtual seat of a low price or grade. Thereby, a virtual seat is created.

Note that, in the following, in order to facilitate understanding of explanation, a seat also includes a concept of an area, and a seat or an area is collectively referred to as a seat simply, except when a seat and an area need to be distinguished particularly.

Also, the recommendation system 21 updates the information of the audience seat sales situation DB 26, the user profile DB 27, the purchase history information DB 28, the host profile DB 29, and the action plan DB 30 as appropriate, in response to the situation of the recommendation process and other process. Further, the recommendation system 21 transmits to and receives from the ticket selling system 24 the information necessary for the process.

The information presenting unit 22 presents, to the user, various types of information transmitted from the recommendation system 21 and the ticket selling system 24. For example, the information presenting unit 22 presents information relevant to the event and the seat that are recommended for the user. Also, the information presenting unit 22 transmits information input by the user to the recommendation system 21 and the ticket selling system 24.

Note that, in the drawing, only one information presenting unit 22 is depicted, but actually a plurality of information presenting units 22 are provided. For example, the information presenting unit 22 is configured by a terminal used by a user (for example, a computer, a mobile phone, a smartphone, a tablet terminal, etc.) or an application program that operates on a terminal used by a user. Also, for example, the information presenting unit 22 can be incorporated in the ticket selling system 24, and configured by a terminal (for example, a multimedia terminal) put at a store front such as a ticket store and a convenience store, or an application program that operates on a terminal.

The information presenting unit 23 presents various types of information transmitted from the recommendation system 21, to the host or the like of the event. For example, the information presenting unit 23 presents information relevant to event ticket sales situation, sales strategy, analysis data of ticket sales performance of the past, and the like. Also, the information presenting unit 23 transmits information input by the host or the like, to the recommendation system 21.

Note that, in the drawing, only one information presenting unit 23 is depicted, but actually a plurality of information presenting units 23 are provided. For example, the information presenting unit 23 is configured by a terminal used by the host or the like (for example, a computer, a mobile phone, a smartphone, a tablet terminal, etc.) or an application program that operates on a terminal used by the host or the like.

Also, the host or the like includes a business operator involved in an event (for example, a promoter, a ticket sales business operator, an owner of an event venue, etc.), an owner or the like of a facility utilized in an action plan before and after an event, for example.

The ticket selling system 24 is a system that sells a ticket of an event and manages booking, using information contained in each DB. Also, for example, the ticket selling system 24 provides a ticket sale service, by displaying a screen image and a website for ticket sales on a terminal put at a store front such as a ticket store and a convenience store, the information presenting unit 22 of each user, or the like. Also, the ticket selling system 24 updates information of the audience seat sales situation DB 26, the user profile DB 27, and the purchase history information DB 28 as appropriate, in response to the ticket sales situation or the like.

Note that the ticket sales by the ticket selling system 24 also includes a case in which a right of a seat of an event is given without issuing a ticket of paper medium, a digital ticket, or the like, for example. In this case, a user who is given a right of a seat of an event is authorized to enter and sit in a venue, by personal authentication or the like, for example.

The event information DB 25 retains event information relevant to an event handled by the information processing system 11. The event information includes all or some of information described in the following, for example.

For example, the event information includes an event ID for identifying each event, an event date and time, a venue, event content, cast members, a price, and the like.

Also, the event information includes information relevant to a time table, an order of appearance and a schedule time of appearance of cast members, a set list, progress and staging of each event such as a motion of lighting and a set, and the like, for example.

Further, the event information includes venue information relevant to a venue of each event, for example. The venue information mainly includes an environment of an audience seat and information that affects how an event region is viewed from an audience seat. For example, the venue information includes information such as type and size of venue, location of seat, type of seat (S-class seat, A-class seat, standing room, non-smoking seat, smoking seat, etc.), interval of seat, specification of seat (for example, shape, size, material, etc.), surrounding environment of seat (for example, entrance and exit, passageway, position of air-conditioning facility, etc.). Also, the venue information includes information relevant to event region, set, musical instrument, lectern, moderator table, lighting, sound facility, facility and setting of each event venue such as position and specification of equipment, for example. Further, when the setting of the venue changes in temporal sequence, the venue information also includes information thereof, for example. Also, the venue information includes a seat vector that represents a feature of each seat.

Also, the event information includes information relevant to a virtual seat, such as a relationship between a virtual seat and how an event region is viewed in a delivered video, for example.

Further, the event information includes information that affects how cast members are viewed from an audience seat, such as a physical feature of a cast member of an event (for example, a height, a body shape, etc.), a feature of motion and performance, a costume of a cast member, and the like, for example.

Note that, in the present specification, the cast member includes a person, an animal, or the like, which are viewed in an event. For example, a player of a sport, an animal of a circus, and the like are also included in the cast member.

Also, for example, the event information is created and retained for each event of each time, when the same event is performed consecutively at the same venue, such as an event of two stages in a day and a night, an event that is performed on consecutive days at the same venue, or the like. Also, the venue information is created and retained for each venue, with respect to an event dispersedly performed at a plurality of venues such as live viewing, for example.

The audience seat sales situation DB 26 retains audience seat sales situation information indicating a situation of sales or booking of an audience seat of each event. The audience seat sales situation information includes an event ID, vacant seat information indicating a position of a vacant seat, a user ID for identifying a user who has purchased or booked a seat, or the like, for example.

The user profile DB 27 retains a user profile which is information relevant to each user who utilizes a service provided by the information processing system 11. The user profile includes all or some of information described in the following, for example.

For example, the user profile includes a general attribute of a user, such as user ID, gender, age, nationality, address, occupation, place of origin, and educational background.

Also, the user profile includes a physical feature of a user, for example. In particular, the user profile includes a physical feature of a user that affects how an event region is viewed from a user himself or herself and a surrounding user, such as height, sitting height, body shape, eyesight, whether to use wheelchair, for example.

Further, the user profile includes preference information relevant to a preference of a user, for example. For example, the preference information includes user's preference information to an event (including a cast member), such as favorite artist, member of favorite group, favorite team, favorite player, type of favorite event, favorite genre, favorite or skilled musical instrument, and favorite stage set. Also, for example, the preference information includes user's preference information to a venue and a seat, such as favorite venue, position of favorite seat, angle for viewing favorite event region, favorite type of seat, and favorite specification of seat.

Also, the user profile includes how-to-view feature information indicating a feature of how a user views an event, for example. The how-to-view feature information includes information such as fuss, sing, dance, move violently, laugh, cry, hit hands, view quietly, sit and view, stand and view, sleep, cheer, raise a strange voice, jeer, mutter, speak with surrounding, cosplay, use goods for cheer, jiggle legs nervously, drink alcohol, leave a seat frequently, join late, and go home in the middle, for example.

Note that the how-to-view feature information may include not only an actual feature of a user, but a user's desire such as want to fuss, want to sing, and want to dance. Also, the how-to-view feature information of each user may be divided and held for each event type and cast member, in consideration of how a user views an event is different for each event type and cast member.

Also, the how-to-view feature information can be created on the basis of an answer to a questionnaire from each user, and can be created on the basis of an analysis result of a video near seat of each user in event, a picture, sound, for example. Also, for example, the information relevant to a feature of how a user views can be extracted and reflected in the how-to-view feature information by analyzing a text of a post or the like on a social media relevant to an event by a user himself or herself and an audience of seats surrounding a user.

Also, the user profile includes a user vector that represents a feature of a user.

The purchase history information DB 28 retains purchase history information relevant to a purchase history of event tickets of each user in the past. The purchase history information includes all or some of information described in the following, for example.

For example, the purchase history information includes information such as user ID, number of purchase times, venue of purchased event, seat type and seat position, event type (for example, movie, play, concert, sport, etc.), and cast members of event. Also, the purchase history information includes information indicating a purchase pattern of each user, such as repetitively purchasing a ticket of an event of the same type (for example, a concert of the same artist, etc.), purchasing tickets of wide genres, purchasing rarely, for example. Further, the purchase history information includes a history of booking a recommended action plan before an event or after an event.

Note that, the purchase history information may include not only the purchase of the ticket, but also a history of each user's browsing information relevant to an event or adding a bookmark or the like to consider purchasing a ticket, for example. Also, the user profile of each user of the user profile DB 27 may be updated on the basis of the purchase history information.

The host profile DB 29 contains a host profile which is the information provided from a host or the like with respect to each event. The host profile includes all or some of information described in the following, for example.

For example, the host profile includes a host ID for identifying a host or the like, an event ID, sales policy information indicating a sales policy of a host or the like to each event, and information indicating a schedule and an episode of cast members of each event.

The sales policy information includes a sale target (for example, sell out or sell over ? %, etc.), and sales strategy information, for example. The sales strategy information includes information such as whether or not there is a promotion of each event, a method of a promotion, a period of a promotion, whether or not a ticket price is discounted and a discount rate, whether or not there is a privilege to a participant of an event and a content of a privilege, and the like, for example. Note that, as a content of a privilege, a handshake ticket, a participation ticket of a signing event, a present of related goods, a dressing room visit, a right of downloading premium content using augmented reality (AR), or the like are envisaged, for example.

Also, different privileges can be set for each seat or area of an event, for example. For example, a camera and a display may be provided at a specific seat, to communicate with a cast member and an audience of another seat (for example, talk, or sing together). Also, in the case of an event dispersedly held at a plurality of venues such as live viewing, it can be possible to communicate with an audience of another venue, for example.

Also, the sales strategy information includes seat location policy information indicating a policy taken when locating an audience in audience seats, for example. The seat location policy information includes information indicating from which seat or from which area the audience is located preferentially, and information indicating the type of the audience preferentially located in each seat or each area, for example. Note that, the type of the audience can be classified on the basis of at least one of an attribute, a physical feature, a feature relevant to a preference, and a feature relevant to how to view an event, for example. More specifically, the type of the audience is classified into a fan of each member of a group that performs, a hard-core fan and a light fan, a gender, an age group, and a like, for example.

Note that, as described later, the sales strategy can be set and executed for each seat of the event.

The action plan DB 30 retains information used in recommending an action plan before an event or after an event. For example, the action plan DB 30 retains a facility database (DB) relevant to facilities utilized in an action plan. Also, for example, the action plan DB 30 retains a desired action ranking which is a ranking of actions that the user desires to perform before an event and after an event.

### [Exemplary Configuration of Recommendation System 21]

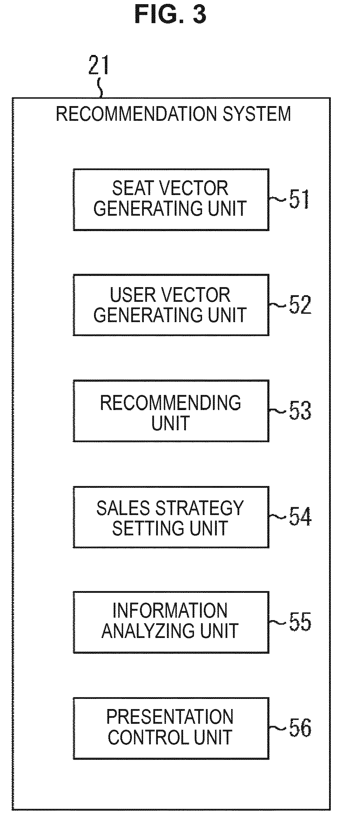

FIG. 3 is a block diagram illustrating an exemplary configuration of the function of the recommendation system 21. The recommendation system 21 includes a seat vector generating unit 51, a user vector generating unit 52, a recommending unit 53, a sales strategy setting unit 54, an information analyzing unit 55, and a presentation control unit 56.

The seat vector generating unit 51 generates a seat vector that represents a feature of each seat of each event, on the basis of the information of the event information DB 25, the audience seat sales situation DB 26, the user profile DB 27, and the host profile DB 29. The seat vector generating unit 51 stores information indicating the generated seat vector in the event information DB 25.

The user vector generating unit 52 generates a user vector that represents a feature of each user, on the basis of the information of the user profile DB 27 and the purchase history information DB 28. The user vector generating unit 52 stores information indicating the generated user vector in the user profile DB 27.

The recommending unit 53 selects a combination of a recommended event and a user, and a combination of a recommended seat of an event and a user, on the basis of the information of each DB. In other words, the recommending unit 53 selects an event and a seat of an event that are recommended for a user, and selects a user for whom an event and a seat of an event are recommended, on the basis of the information of each DB. Also, the recommending unit 53 performs a selection of an action plan before an event and after an event which is recommended for a user, on the basis of the information of each DB. Further, the recommending unit 53 performs setting of a price of an event and a privilege, on the basis of the information of the user profile DB 27 and the host profile DB 29.

The sales strategy setting unit 54 generates and updates the sales strategy information, on the basis of a command from a host or the like which is input via the information presenting unit 23, and stores it in the host profile DB 29.

The information analyzing unit 55 performs various types of information analysis, such as an action and a preference of a user, and a sales situation of tickets of an event, on the basis of information from a user input via the information presenting unit 22, information from a host or the like input via the information presenting unit 23, information from the ticket selling system 24, and the information of each DB. For example, the information analyzing unit 55 counts actions before an event and after an event which are desired by a user, on the basis of the information input by the user, and stores a desired action ranking indicating the count result in the action plan DB 30. Also, the information analyzing unit 55 performs counting of sales situation of tickets of an event and audience seats, on the basis of the information of the audience seat sales situation DB 26 and the purchase history information DB 28. Further, the information analyzing unit 55 supplies the analysis result to the ticket selling system 24, or stores it in each DB, as necessary.

The presentation control unit 56 controls a presentation of various types of information by the information presenting unit 22 and the information presenting unit 23. For example, the presentation control unit 56 controls a presentation by the information presenting unit 22 of an event, a seat of an event, an action plan before an event, and an action plan for each event, which are recommended for a user. Also, for example, the presentation control unit 56 controls a presentation by the information presenting unit 23 of sales situation of tickets of an event and audience seats.

### [Recommendation Process of Event and Seat]

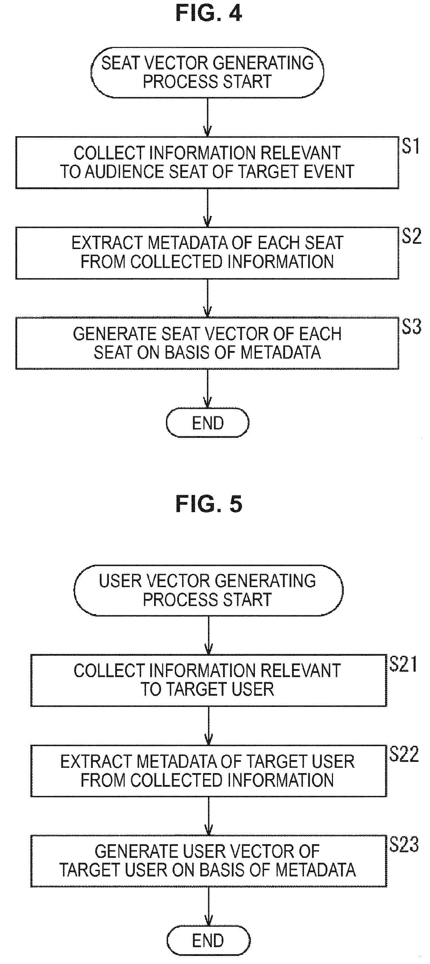

Next, with reference to FIGS. 4 to 16, a recommendation process of an event and a seat executed by the information processing system 11 will be described. Note that, in the following, a target event of a process is referred to as a target event, and a target user of a process is referred to as a target user.

### (Seat Vector Generating Process)

First, with reference to the flowchart of FIG. 4, a seat vector generating process executed by the recommendation system 21 will be described.

Note that this process is executed on a regular basis, or when there is a change in information relevant to a target event of the event information DB 25, the audience seat sales situation DB 26, or the host profile DB 29, or when recommending a seat for a user, or the like, for example.

In step S 1, the seat vector generating unit 51 collects information relevant to an audience seat of a target event, from the event information DB 25, the audience seat sales situation DB 26, the user profile DB 27, and the host profile DB 29. In this case, all information related directly or indirectly may be collected, if it is information relevant to an audience seat of a target event. Alternatively, the range of collected information may be limited.

In step S2, the seat vector generating unit 51 extracts metadata of each seat from the collected information. Specifically, the seat vector generating unit 51 extracts information relevant to each seat from the collected information, with respect to each seat of the venue of the target event, and divides the extracted information into appropriate units, in order to extract metadata of each seat. In this case, the seat vector generating unit 51 may process the collected information as necessary, in order to generate metadata of each vacant seat. For example, metadata relevant to the musical instrument or the like viewed from each seat may be generated from the information relevant to the setting of the stage and the seat position.

In step S3, the seat vector generating unit 51 generates a seat vector of each seat, on the basis of the metadata. That is, the seat vector generating unit 51 generates a seat vector that represents a feature of each seat, by vectorizing the metadata of each seat by a predetermined method.

Here, the feature of the seat represented by the seat vector includes at least one of the feature relevant to how the event region is viewed from the seat, the feature relevant to how the sound is heard in the seat, the feature relevant to the surrounding audience of the seat, the feature relevant to the environment of the seat, and the feature of the user assigned preferentially to the seat, for example.

Also, the feature relevant to how the event region is viewed from the seat includes features such as a position relationship of the seat and the event region, presence or absence and position of an obstacle between the seat and the event region, a musical instrument viewed from the seat, cast members viewed from the seat, position and size of the set and the like viewed from the seat, for example.

The feature relevant to how the sound is heard in the seat includes features such as a specification of the sound facility of the venue, a position relationship of the seat and the sound facility, presence or absence and position of an obstacle between the seat and the sound facility, for example.

The feature relevant to the surrounding audience of the seat is features extracted from the user profile of the surrounding audience of the seat, for example, and includes an attribute, a physical feature, a feature of preference, a feature of how to view an event, or the like of the surrounding audience, for example.

The feature relevant to the environment of the seat is a feature that represents coziness or the like of the seat for example, and includes features such as the type of the venue, the interval of the seat, the specification of the seat, the surrounding environment of the seat.

The feature of the user assigned preferentially to the seat is information extracted from the seat location policy information of the above host profile DB 29 for example, and includes the type of the audience preferentially located in the seat, and the like.

Note that the method to vectorize the metadata can employ an appropriate method, such as the method illustrated in JP 2011-135183A.

Also, in this case, each metadata may be weighted according to degree of importance, in order to be vectorized. For example, in the seat recommendation process which is described later, it is conceived to set a large weight on the metadata extracted from the information of the host profile DB 29, when the intention of the host or the like is to be reflected significantly in recommending a seat for the user (for example, when the type of the user sitting on each seat is to be separated by the intention of the host). Also, when only the intention of the host or the like is to be reflected, it is conceived to set, at 0, the weight of the metadata other than the metadata extracted from the information of the host profile DB 29. Conversely, for example, when the intention of the host or the like is to be prevented from being reflected significantly, it is conceived to set a small weight of the metadata extracted from the information of the host profile DB 29. Also, when the intention of the host or the like is to be completely prevented from being reflected, it is conceived to set, at 0, the weight of the metadata extracted from the information of the host profile DB 29.

Then, the seat vector generating unit 51 stores the information indicating the generated seat vector of each seat of target event, in the event information DB 25.

Thereafter, the seat vector generating process ends.

### (User Vector Generating Process)

Next, with reference to the flowchart of FIG. 5, a user vector generating process executed by the recommendation system 21 will be described.

Note that this process is executed on a regular basis, or when there is a change in the information relevant to the target user of the user profile DB 27 or the purchase history information DB 28, or when performing recommendation of the seat for the target user, or the like, for example.

In step S21, the user vector generating unit 52 collects information relevant to the target user, from the user profile DB 27 and the purchase history information DB 28. In this case, all information related directly or indirectly may be collected, if it is information relevant to the target user. Alternatively, the range of the collected information may be limited.

In step S22, the user vector generating unit 52 extracts metadata of the target user from the collected information. Specifically, the user vector generating unit 52 divides the collected information into appropriate units, or discards unnecessary information, in order to extract the metadata of the target user. In this case, the user vector generating unit 52, processes the collected information as necessary, in order to generate the metadata of the target user.

In step S23, the user vector generating unit 52 generates a user vector of the target user on the basis of the metadata. That is, the user vector generating unit 52 generates a user vector that represents the feature of the target user, by vectorizing the metadata of the target user, by the same method as the process of step S3 of FIG. 4. In this case, each metadata may be weighted according to degree of importance in order to be vectorized.

Here, the feature of the target user represented by the user vector includes at least one of the attribute of the target user, the physical feature of the target user, the feature relevant to the preference of the target user, and the feature relevant to how the target user views the event, for example.

Then, the user vector generating unit 52 stores the information indicating the generated user vector of target user, in the user profile DB 27.

Thereafter, the user vector generating process ends.

### (Event Recommending Process (Push-Based))

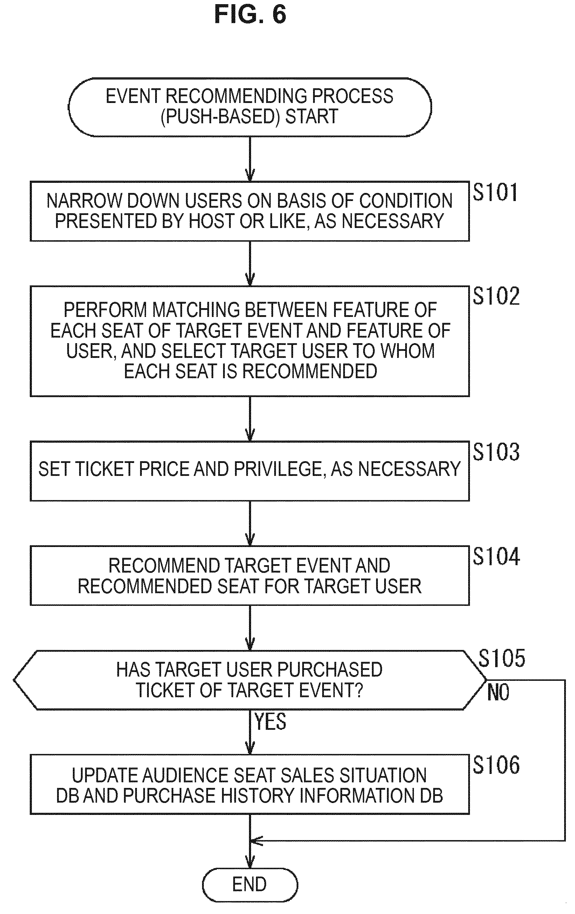

Next, with reference to the flowchart of FIG. 6, a push-based event recommending process executed by the information processing system 11 will be described. Note that this process is executed when performing the push-based promotion for the target event, for example.

In step S101, the recommending unit 53 narrows down the users on the basis of a condition presented by the host or the like, as necessary. Specifically, the recommending unit 53 narrows down candidate users which are the candidates for which the target event is recommended as necessary, on the basis of the information of the host profile DB 29. Thereby, for example, the candidate users are narrowed down to fans of a specific artist, users of a specific age group, users of a specific gender, or the like.

Note that, for example, the candidate users may be narrowed down for each seat or area in the venue. That is, the different candidate users may be extracted for each seat or area. Also, for example, in the case of an event dispersedly performed at a plurality of venues, such as live viewing, the candidate users may be narrowed down for each venue. Thereby, for example, the fans of a specific member of a group that performs in the event can be collected at a specific area in the venue or a specific venue.

Note that, when the host or the like does not set out a condition particularly, all users are selected as the candidate users.

In step S102, the recommending unit 53 performs matching between the feature of each seat of the target event and the feature of the user, and selects target users for whom respective seats are recommended. Specifically, the recommending unit 53 reads the seat vector of each vacant seat of the target event, from the event information DB 25. Note that, when the seat of the recommendation target is decided by the host or the like, the recommending unit 53 reads only the seat vector of the seat set as the recommendation target from among the vacant seats of the target event. Also, the recommending unit 53 reads the user vector of each candidate user from the user profile DB 27.

The recommending unit 53 calculates a distance between the vectors (that is, the degree of similarity between the corresponding feature value vectors), with respect to all combinations between the read seat vector and the user vector. As this distance between vectors, for example, a cosine distance, a Euclidean distance, or the like is used.

Then, for example, the recommending unit 53 extracts the candidate users whose distance between the vectors is a predetermined threshold value or less, with respect to each seat, and selects the target user for whom each seat is recommended. Alternatively, for example, the recommending unit 53 selects candidate users that ranks within predetermined high positions in the candidate users list that is sorted in the order from the candidate user having the smallest distance between the vectors, as the target users for whom each seat is recommended, with respect to each seat. Thereby, the user having the feature that fits to the feature of each seat is selected as the target user. Note that a same user is selected as the target users of a plurality of seats, in some cases.

Note that, in this case, a user who has already purchased a ticket of the target event can be selected as the target user. That is, for example, when a seat cancellation occurs, when a good seat remains unreserved, when an upgrade of the seat is recommended, or in like cases, it may be recommended for the target user to change the seat that has already been purchased with another seat.

In step S103, the recommending unit 53 sets a ticket price and a privilege, as necessary. That is, the recommending unit 53 sets a ticket price and a privilege presented to the target user, on the basis of the information of the user profile DB 27 and the host profile DB 29.

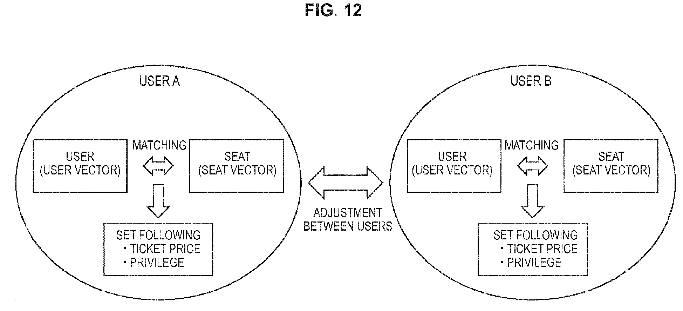

Note that, in this case, the content of a combination of a recommended seat, a ticket price, and a privilege may be adjusted to eliminate a sense of unfairness between users. Note that the adjustment method of the content of the combination of the recommended seat, the ticket price, the privilege will be described later with reference to FIGS. 12 to 16.

In step S104, the information processing system 11 recommends a recommended seat and a target event for the target user. Specifically, the presentation control unit 56 generates recommended event information for recommending the target event for each target user.

Note that this recommended event information includes recommended seat information relevant to the recommended seat recommended for the target user. This recommended seat information includes the information relevant to how the event region is viewed from the recommended seat, how the sound is heard in the recommended seat, the surrounding audience of the recommended seat, the environment of the recommended seat, for example.

Then, the presentation control unit 56 transmits the generated recommended event information to the information presenting unit 22 utilized by the target user. The information presenting unit 22 presents the received recommended event information to the target user.

Note that, any method can be employed, as the method for presenting the recommended event information. For example, an e-mail including the recommended event information may be transmitted to the target user. Also, for example, the recommended event information may be posted on a target user's page of the website for members. Further, for example, the recommended event information may be presented, utilizing a social media such as a social networking service (SNS).

Also, for example, when the target user views the event information using a smartphone and a tablet terminal, the recommended event information may be presented utilizing an application program that operates on those devices. In this case, for example, the target user can be notified of the event information immediately, by a method such as launching an application program automatically when receiving the event information, and displaying a pop-up by the program automatically.

Further, for example, when the host or the like conveys information to the target user by a paper medium such as a direct e-mail and a flier, the event information recommended for the target user may be described thereon.

In this case, not only the information relevant to the recommended target event, but also the information relevant to the recommended seat is presented to the target user. Further, not only the position of the recommended seat, but also how the event region is viewed from the recommended seat and the surrounding situation can be visually presented, for example.

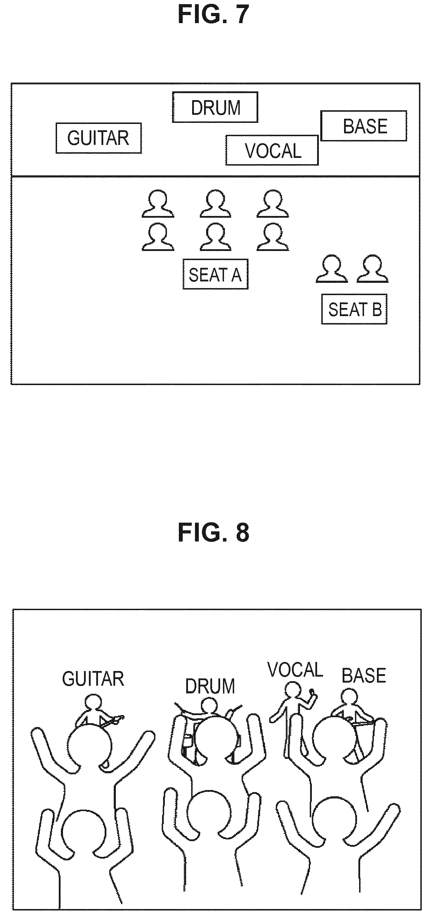

Here, with reference to FIGS. 7 to 9, an example of a method for presenting the information relevant to the recommended seat visually will be described.

First, as illustrated schematically in FIG. 7, an entire screen image including a look-down image of an entire venue is displayed. In this entire screen image, a position relationship of an event region (in this example, a stage) and audience seats, and positions of musical instruments and a set on the event region are illustrated. Also, the positions of recommended seats in the venue are illustrated.

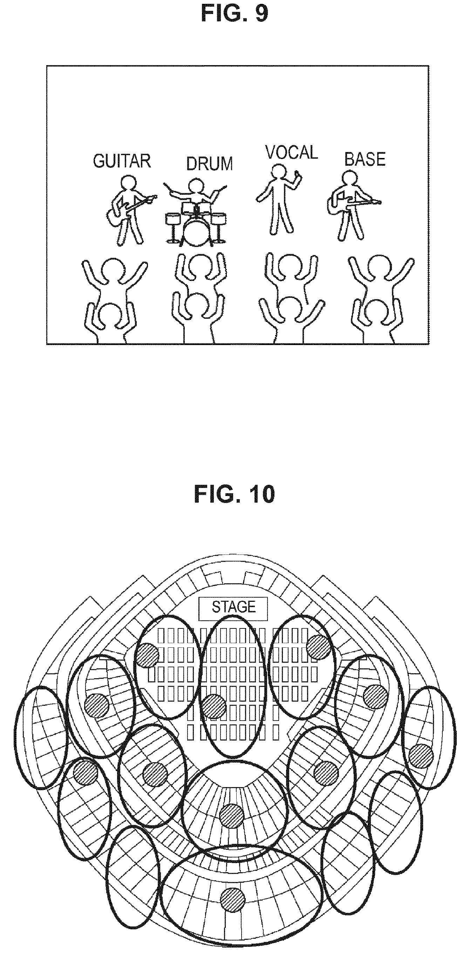

Then, when the target user selects a desired seat from among the recommended seats illustrated in the entire screen image, a detail screen image including an image that simulates a sight from the selected recommended seat is displayed. For example, when a seat A is selected from the entire screen image of FIG. 7, a detail screen image including an image that simulates a sight from the seat A schematically illustrated in FIG. 8 is displayed. When a seat B is selected, a detail screen image including an image that simulates a sight from the seat B schematically illustrated in FIG. 9 is displayed.

For example, in the detail screen images of FIGS. 8 and 9, images that simulates how the event region (in this example the stage) is viewed from each seat and the surrounding situation of each seat are displayed. For example, models of cast members that simulates heights and body shapes, musical instruments, a set are displayed on the stage according to actual locations. Also, models of the surrounding audience that simulates height (sitting height), body shape, motion (for example, view standing, view sitting, move vigorously, etc.) or the like is displayed according to the actual seat of each audience.

Thereby, the target user can easily recognize the detailed information which is not known from a seat position only, and can select a seat of a high degree of satisfaction fitted to his or her own preference and how to enjoy.

For example, in the examples of FIGS. 7 to 9, the seat A is closer to the stage than the seat B and is around the center, but there are many tall spectators and spectators who stand and fuss in front of the seat A. Hence, it is highly possible that the sight is blocked, or that one is unable to enjoy the event in a relaxed manner. On the other hand, it is highly possible that one can be excited, stand, and fuss together with the surrounding audience.

On the other hand, the seat B is farer from the stage than the seat A and far from the center, but tall spectators and spectators who stand and fuss are few in front of the seat B. Hence, it is highly possible that the sight is not blocked, and that one can enjoy the event, sitting in a relaxed manner. On the other hand, it is highly possible that one is unable to be excited, stand, and fuss together with the surrounding audience.

Thus, for example, on the basis of the information that is unknown from the seat position only, a tall user and a user who wants to be excited can select the seat A, and a short user and a user who wants to enjoy sitting in a relaxed manner can select the seat B.

Note that, instead of the models of human shape, surrounding atmosphere of the recommended seat (for example, a degree of excitement and a sense of quietness, etc.) may be represented by color, image, or the like, for example.

Also, for example, a specific recommendation reason, such as "this is a seat around which there are many excited spectators", "this is a seat at which you can enjoy quietly", and "this is a seat around which there are many fans of cast member A", may be presented.

Also, for example, the privilege set by the host or the like for the recommended seat may be presented as a recommendation reason. For example, a recommendation reason such as "cast members will look at spectators in this area frequently on the day from the stage (in addition, wave their hands, throw kisses, etc.)", "cast members will throw presents (for example, items on their body, etc.) toward spectators in this area", and "to this area, cast members will walk in the middle of the event and, if lucky, shake hands" may be presented. Note that, in the case of an event in which there are many cast members, a seat is recommended in consideration of a target user's favorite cast member, and these recommendation reasons may be presented, for example.

Also, for example, a recommendation reason such as "the situation of this area is scheduled to be broadcasted in live broadcasting of the television station at least 5 times on the day" may be presented. Further, the content of specific privilege may not be revealed, as in "spectators in this area can enjoy an impressive experience on the day. please look forward to the content until the day", for example. Then, for example, staging may be performed in such a manner that the entire venue is as if in a galaxy at the end of the concert, and the seats of the target area rise in order to allow to view from the above both of the grand staging and the artists singing with special costumes on them.

As described above, the privilege set at the recommended seat is presented as the recommendation reason, so as to implement the sales strategy easily by the host or the like, leading to sales promotion and excitement of the event.

Further, for example, arrangement of audience seats and positions of vacant seats may be presented, and the vacant seats may be presented in a distinguishable manner, such as different colors, on the basis of the distance between the user vector of the target user and the seat vector of each seat. Thereby, the target user can easily find a seat that fits to his or her taste from among the vacant seats.

Also, how the sound is heard may be simulated for each recommended seat, to allow the target user to listen to it.

Returning to FIG. 6, in step S105, the ticket selling system 24 determines whether or not the target user has purchased a ticket of the target event. If it is determined that the target user has purchased a ticket of the target event, the process proceeds to step S106.

In step S106, the ticket selling system 24 updates the audience seat sales situation DB 26 and the purchase history information DB 28.

Thereafter, the event recommending process ends.

On the other hand, in step S105, if it is determined that the target user has not purchased a ticket of the target event, the process of step S106 is skipped, and the event recommending process ends.

As described above, a seat of high degree of satisfaction that fits to the preference of each user is recommended. For example, a seat from which fingers of a pianist are viewed well is recommended for a user who likes piano, and a seat which is surrounded by many excited spectators is recommended for a user who likes fussing, and a seat which is surrounded by many calm spectators is recommended for a user who likes enjoying quietly. Also, each user can visually confirm how the event region is viewed from the recommended seat and the surrounding situation, in order to select a seat of higher degree of satisfaction. Thereby, the user's degree of satisfaction in the seat of the event improves, and as a result, the user's degree of satisfaction in the entire event also improves.

Also, for example, even when few good seats remain unreserved, the user can confirm and understand the fact visually, and then select a seat to purchase a ticket. Thus, for example, the user is prevented from sitting on a different seat from an image expected when purchasing and getting disappointed, before it happens.

Further, in the above process, for example, as illustrated in FIG. 10, the audience seats are divided into several areas surrounded by circles, and types of the users that are located preferentially are set for each area, so that a seat in the area set for the user of each type is recommended.

Thereby, the users of the same type are collected in the same area. For example, each fan is divided and located in each area close to each member of the group that performs, or in each area from which each member is viewed easily. Also, for example, a user who wants to be excited enthusiastically and a user who wants to enjoy lightly are divided and located. As a result, the event is made more exciting, and the degree of satisfaction of each user is improved.

Note that, for example, the location of each area may be changed in the middle of the event. That is, for example, the seats may be exchanged between the user in the area A and of the user in the area B, in the middle of the event. Thereby, for example, in the case of the event in which a plurality of cast members change, as in a joint concert, fans of each cast member are moved to seats from which the stage is viewed easily, each time the cast members change.

Also, in areas illustrated with oblique line sections in each area of FIG. 10 (hereinafter, referred to as representative areas), the users of a type who excite the audience seat may be located preferentially. Thereby, the users of the type who excite are dispersed, and as a result the excited area is not fixed to a specific area, but the entire venue is excited.

Further, for example, the users who represent the users of the type that are located preferentially in the area (the users who represent the type) may be located preferentially in the representative area of each area. For example, the users having the user vectors whose distances relative to the average value of the seat vectors in a certain area are equal to or smaller than a predetermined threshold value may be located preferentially in the representative area of the area. Alternatively, for example, the users having the user vectors whose distances relative to the average value of the user vectors of the users of the type that are located preferentially in a certain area are equal to or smaller than a predetermined threshold value may be located preferentially in the representative area of the area.

Also, for example, the type of the users who are located preferentially for each area can be changed at a predetermined timing (for example, on a regular basis). Thereby, different types of users are located in one area.

Note that, for example, in the case of an event dispersedly held at a plurality of venues, such as live viewing, the type of audience located preferentially for each venue may be differentiated. Thereby, for example, the fans of respective members of the cast members can be collected in different venues respectively, and the videos shooting the target member preferentially can be delivered to each venue Each venue.

Also, for example, in the case of an event continuously performed at the same venue, the type of the audience located preferentially may be changed for each time. For example, when the concert of a certain group is performed continuously, and the featured member is different at each time, the fans of each member can be allowed to enter preferentially at each time.

Further, as described above, in the above process, a change to another seat can be recommended for the user who has already purchased a ticket. For example, the seat B having the seat vector whose distance to the user vector of the user is smaller than the seat A can be recommended for the user to whom the seat A is assigned. Thereby, the user's degree of satisfaction improves. Also, for example, a change fee may be collected when changing the seats.

Also, the seats are recommended in consideration of a sales strategy of a seller or the like in addition to the feature of the seat and the feature of the user, in order to improve the user's degree of satisfaction, and to perform a new promotion that does not exist in the past, and to promote topical gimmick relevant to the event, for example.

### (Event Recommending Process (Pull-Based))

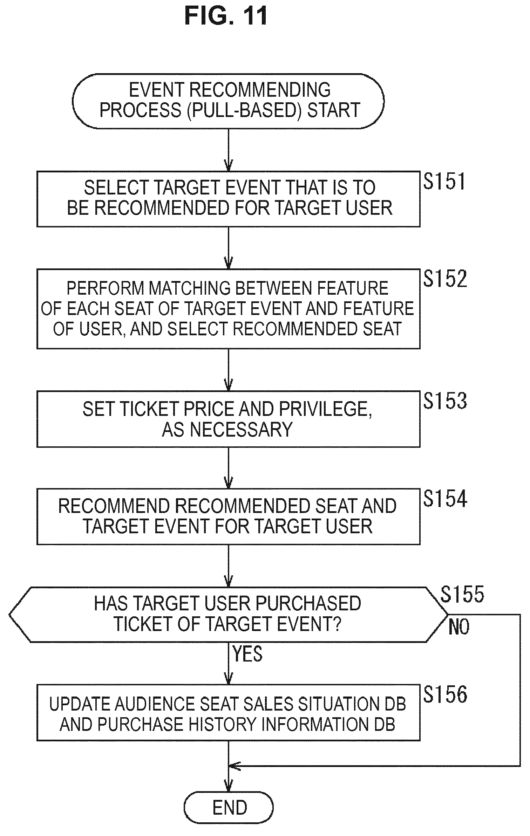

Next, with reference to the flowchart of FIG. 11, a pull-based event recommending process executed by the information processing system 11 will be described.

Note that this process is started when the target user inputs a command of recommendation of event into the recommendation system 21 via the information presenting unit 22, for example.

In step S151, the recommending unit 53 selects a target event that is recommended for the target user. For example, when a condition is given from the target user, the recommending unit 53 selects an event that satisfies the condition, as the target event. Also, for example, when a condition is not given from the target user, the recommending unit 53 extracts an event that fits to the preference of the target user, using a predetermined method, and selects it as the target event.

Note that the number of target events that are recommended for the target user is not limited one, but may be a plurality. Note that, in the following, in order to simplify the description, a case in which the number of target events that are recommended for the target user is one will be described.

In step S152, the recommending unit 53 performs matching between the feature of each seat of the target event and the feature of the target user, and selects a recommended seat. Specifically, the recommending unit 53 reads the seat vector of each vacant seat of the target event from the event information DB 25. Note that, when the seat of the recommendation target is decided by the host or the like, the recommending unit 53 reads only the seat vector of the seat set as the recommendation target from among the vacant seats of the target event. Also, the recommending unit 53 reads the user vector of the target user from the user profile DB 27. Further, the recommending unit 53 calculates a distance between the vectors, with respect to all combinations of the read seat vector and the user vector.

Then, the recommending unit 53 selects a vacant seat whose distance between the vectors is equal to or smaller than a predetermined threshold value, as the recommended seat recommended for the target user, for example. Alternatively, the recommending unit 53 selects vacant seats that ranks within predetermined high positions in the vacant seats list that is sorted in the order from the vacant seat having the smallest distance between the vectors, as the recommended seats, for example. Thereby, the seat having the feature that fits to the feature of the target user is selected as the recommended seat.

Thereafter, in steps S153 to S156, the same processes as steps S103 to S106 of FIG. 6 are executed, and the target event and the recommended seat are recommended for the target user.

Thereafter, the event recommending process ends.

### (Adjustment Method of Content of Combination of Recommended Seat, Ticket Price, and Privilege)

In the event recommending process of the above FIGS. 6 and 11, an example in which the ticket price and the privilege are set is illustrated. This setting of the ticket price and the privilege is performed mainly for the purpose of sales promotion, and the discount of the ticket price and the giving of the privilege are performed when the tickets remain unsold until immediately before the event, for example.

On the other hand, when the discount of the ticket price and the giving of the privilege are performed, the difference is generated between the users depending on the purchase time of the ticket, and it is concerned that the sense of unfairness is generated, such as the seat of high price is worse than the seat of the user who paid less price, and there is no privilege. Thus, for example, as described in the following, other elements selected by eliminating elements of the same condition from among four elements of preference degree to event, seat, ticket price, and privilege may be adjusted to balance in terms of profit and loss.

In the following, as illustrated in FIG. 12, a case in which the seat is recommended for the user A and the user B on the basis of the result of matching between the user vector and the seat vector, and the ticket price and the privilege are set, will be described.

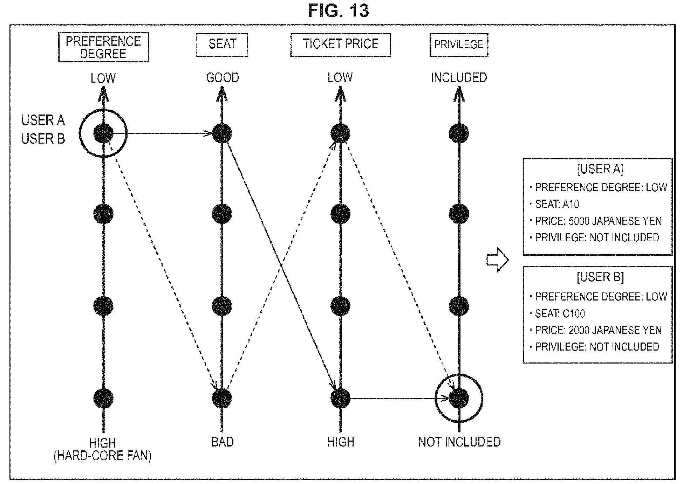

FIGS. 13 to 16 illustrates an example of a method that adjusts the content of the combination of the seat, the ticket price, and the privilege, in response to the preference degree to the event of the user A and the user B (including the preference degree to the cast member of the event), in the case illustrated in FIG. 12. Note that, in FIGS. 13 to 16, four shafts of the same content are illustrated, respectively.

The shaft at the left end indicates the user's preference degree to the event. The preference degree is classified into four clusters according to the intensity of the preference, and the preference degree becomes higher as it goes downward (that is, the hard-core fan), and the preference degree becomes lower as it goes upward.

The second shaft from the left indicates the level of the seat. The level of the seat is classified into four clusters by a predetermined criterion, and the level of the seat becomes worse as it goes downward, and the level of the seat becomes better as it goes upward. Note that, in the examples of FIGS. 13 to 16, in order to facilitate the understanding of explanation, the front-back order of seats is indicated in the order of alphabets, and the seat is better as it goes frontward, and the seat is worse as it goes backward, simply.

The third shaft from the left indicates the ticket price. The ticket price is classified into four clusters depending on the value of the price, and the ticket price becomes high as it goes downward, and the ticket price becomes low as it goes upward.

The shaft at right end indicates presence or absence and the level of the privilege. The privilege is classified into four clusters depending on its content, and there is no privilege at the lowest, and the content of the privilege becomes better as it goes upward.

Thus, in the second shaft from the left to the shaft at right end, the user has merits as it goes upward.

For example, when the preference degree to the event of the user A and the user B is the same degree, the content of the combination of the recommended seat, the ticket price, and the privilege is adjusted to balance in terms of profit and loss between the both.

Specifically, for example, as illustrated in FIG 13, the content of the privilege of the both is set at the same degree, and the seat and the ticket price are set in a relationship of trade-off. That is, as compensation of recommending a better seat for the user A than for the user B, the ticket price of the user A is set higher than the ticket price of the user B. Alternatively, as compensation of setting a higher ticket price for the user A than for the user B, a better seat is recommended for the user A than for the user B. As described above, the sense of unfairness between the both is reduced by giving a better seat to a user who pays a higher price.

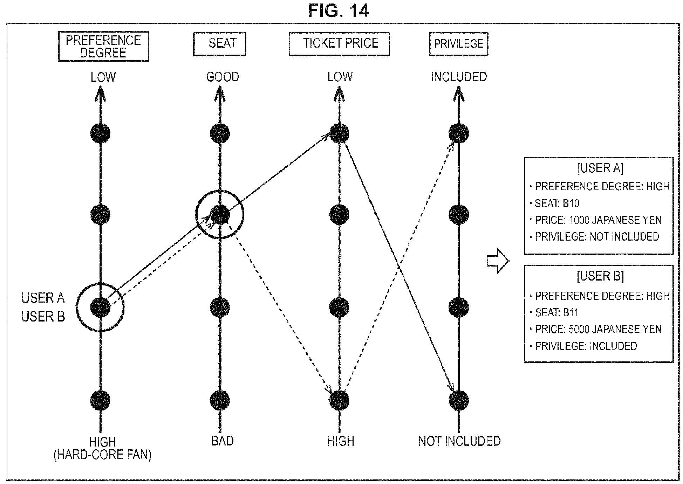

Also, for example, as illustrated in FIG. 14, the levels of the seats recommended for the both are set at the same degree, and the ticket price and the privilege are set in a relationship of trade-off. That is, as compensation of setting a lower ticket price for the user A than for the user B, a privilege is given to the user B only, or a better privilege is given to the user B than to the user A. Alternatively, as compensation of giving a privilege to the user B only, or giving a better privilege to the user B than to the user A, the ticket price of the user B is set higher than the user A. As described above, the sense of unfairness between the both is reduced by giving a better privilege to a user who pays a higher price.

On the other hand, for example, when the user A has a higher preference degree to the event than the user B, the content of the combination of the recommended seat, the ticket price, and the privilege is adjusted in such a manner that the user A has a more merit than the user B in terms of profit and loss.

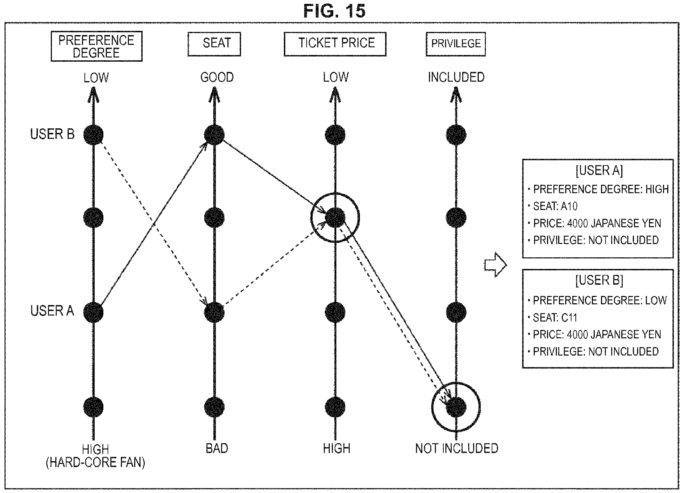

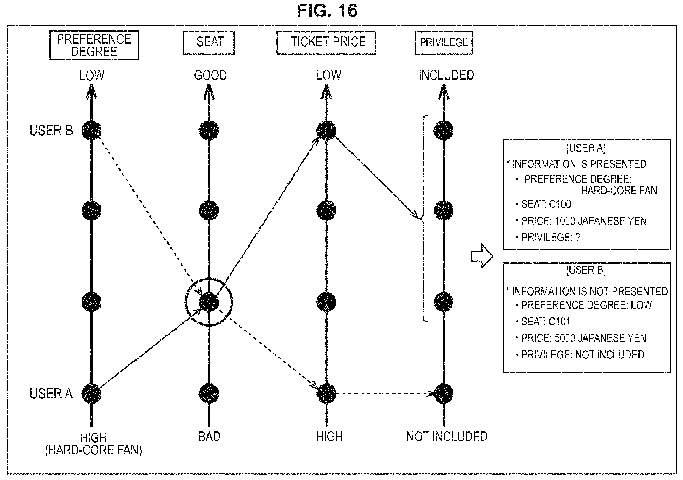

Specifically, for example, as illustrated in FIG. 15, the ticket price and the privilege of the both are set at the same degree, and a better seat is recommended for the user A than for the user B. Also, for example, as illustrated in FIG. 16, the seats of the same level is recommended for the both, and the ticket price of the user A is set lower than the ticket price of the user B. As described above, the sense of unfairness between the both (particularly, the sense of unfairness of the user of high preference degree) is reduced by recommending a better seat for the user who has a high preference degree and requests much to the event, or by offering a lower ticket price.

Note that, for example, in the example of FIG. 16, the privilege may be given to the user A additionally. Also, when attraction of the audience is performed immediately before the event, the event information may be presented only to the user A who is a hard-core fan, to recommend the event. That is, immediately before the event, the good-price information may be provided only to the user A of high preference degree who is highly likely to purchase a ticket.

Here, for example, as a part of customer relationship management (CRM), a user who participates the event of the same type (for example, the concert of the same artist, etc.) more frequently may be regarded as having a higher preference degree to the event of that kind, so that a larger merit is set for the user. Thereby, the repeat guests are increased, and the degree of satisfaction of the high quality customer is increased.

Note that, in order to reduce the sense of unfairness, the fact that the ticket price and the privilege possibly fluctuates between the users depending on the sales of the tickets may be announced in advance, for example. Also, for example, the sales of the tickets and the transition of the ticket price may be presented to the user at time intervals, to increase the transparency for the fluctuation of the ticket price. Further, for example, particularly the hard-core fan is prevented from having the sense of unfairness by giving a better seat, a higher discount rate, or a better privilege to the user of high repeat rate.

### (When Recommending Virtual Seat)

In a virtual event as well, a virtual seat can be recommended for each user using matching between the seat vector and the user vector, in the same way as the event of the real space, but there is a different point from the event of the real space.

For example, the seat vector of the virtual seat is different from the seat vector of the real seat in components (or, metadata as constituents of the seat vector). For example, in the virtual event, concepts of the audience surrounding of the seat, the environment of the seat (the coziness of the seat), or the like do not exist, those elements are needless to be included in the seat vector necessarily.

Note that, for example, in the virtual event, the surrounding environment and the audience can be created in simulation. For example, an area in which imaginary fans of a specific cast member (an imaginary cast member) are collected can be created in simulation and projected in a video. In this case, the elements of the surrounding audience and the environment may be reflected in the seat vector.

Also, elements unique to the virtual event may be included in the user vector. For example, elements such as a position from which the virtual event is viewed (for example, a sofa of a living room, an electrical train when commuting, etc.), a member that views together (for example, alone, a family, a friend, a virtually known person, etc.) can be reflected in the user vector. Also, a user's feature that is different from the event of the real space (for example, speak loudly, dance, sing, etc.) can be reflected in the user vector.

As described above, the virtual seat of the virtual event can be recommended more appropriately, by distinguishing the seat vector and the user vector used in the virtual event from those of the event of the real space.

Also, in the virtual event, a seat that does not exist in the event of the real space can be set, for example, on the stage, directly above and directly below the stage.

Further, in the virtual event, a plurality of users can be located at the same virtual seat, and a concept of a vacant seat does not exist basically. On the other hand, the concept of vacant seat can be introduced by limiting participants of the virtual event, or by limiting the number of users that are located at one seat.

Also, in the virtual event, the movement of the seat is not restricted physically. Thus, the virtual seat may be freely moved in the middle of the virtual event. In this case, for example, the virtual seat of the movement destination can be recommended by the above method. Also, an additional price may be collected when the virtual seat is moved.

Further, the service of the virtual event and the social media can be associated to promote the communication and the information share between the participants. For example, information is exchanged between the users of the same virtual seat, and a community is made. Also, for example, the virtual seat more fitted to himself or herself can be searched for, by exchanging information between the users of the different virtual seat.

Also, the above description can be applied to moving image delivery of live performance or the like in which virtual seats are provided in the same way. Note that, in the case of the moving image delivery of live performance, you-are-there feeling can be increased by reproducing surrounding atmosphere of the seat of the real venue corresponding to the virtual seat.

### (Exemplary Variant)

Here, an exemplary variant of the above recommendation process of the event and the seat will be described.

For example, in the push-based event recommending process of FIG 6, the order of the processes of step S101 and step S102 may be exchanged. That is, the target user may be narrowed down by the intention of the host or the like, after selecting the target user by the matching between the seat vector and the user vector.

Also, for example, when the audience seats are divided into a plurality of areas as illustrated in the above FIG. 10, the seat vector may be calculated for each area, and the seat of each area may be recommended for the user. In this case, for example, the average value of the seat vectors of respective seats in the area can be set as the seat vector of the area.

Further, the seat of the target event can be recommend for the target user, not only when performing recommendation of the event, but also when the target user purchases or books the ticket of the target event, when the target user browses the information relevant to the target event, or the like, for example. The process in this case is achieved by executing the processes in and after step S152 of FIG. 11 with respect to the combination of the target event and the target user, for example.

Also, for example, the ticket price of each seat may be varied for each user, depending on the distance between the vectors of the seat vector and the user vector. For example, the ticket price of a seat having a small distance between the vectors from the user and fitted to the user may be set high, and the ticket price of a seat having a large distance between the vectors and unfitted to the user may be set low.

Further, for example, a seat having a large distance between the vectors and unfitted to the user may be recommended for the user, with a clearly specified reason and a discounted ticket price. Thereby, for example, a seat that a normal user tends to avoid is sold to a user who is not too fastidious about the seat, in order to fill the seats. Also, a user who is not too fastidious about the seat can purchase the ticket at a low price.

### [Process When Recommending Action Plan Before and After Event]

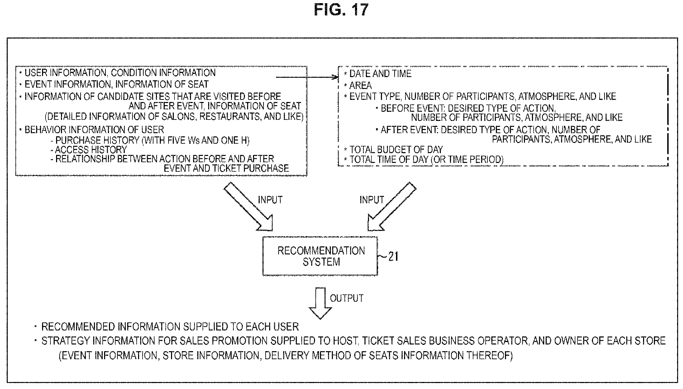

Next, with reference to FIGS. 17 to 30, a process when recommending an action plan before and after the event will be described.

As described above, the recommendation system 21 can simultaneously recommend an action plan before and after the event, in addition to the event. That is, a total action plan centering the event can be proposed for the user by recommending not only the event and the seat as described above, but also actions before and after it and sites and seats fitted to the actions.

### (Overview of Recommendation Process of Action Plan in Event and Before and After Event)

Here, first, with reference to FIGS. 17 to 19, an overview of a recommendation process of an action plan in the event and before and after the event will be described.

First, as illustrated in FIG. 17, all or some of information described in the following is given to the recommendation system 21 as input information.

For example, the input information includes user information of each user, and condition information including a condition and a desire presented by each user. This condition information includes a desired date and time, a desired area, an event type in which the user desires to participate, the number of persons who participate together, an atmosphere, or the like, for example. Also, the condition information includes types of actions desired before and after an event, the number of participants, an atmosphere or the like, a total budget of the day, and a total time, for example. Note that the total time may be specified as a time period, for example, from what time to what time. Also, the condition information is needless to be detailed information necessarily, but may be rough information. Further, all condition information is needless to be input by the user necessarily, but the recommendation system 21 may guess a part or all of the condition information on the basis of the information of the user profile DB 27 and the purchase history information DB 28, and an answer of a preliminary questionnaire, or the like, for example.

Also, for example, event information relevant to each event, and information of the seats of the event venue are given as the input information. Further, for example, information of candidate sites that are visited before and after the event, and information of the seats of the candidate sites are given as the input information. For example, the candidate sites that are visited before the event are salons (for example, a hair salon, a nail salon, an esthetic salon, etc.), a restaurant, or the like, and detailed information including information of the seats of those sites is given as the input information.

Also, for example, behavior information of each user is given as the input information. The behavior information of each user includes a purchase history of a ticket of an event, an access history (for example, a site including information of each event and a history of site access before and after it), information indicating a relationship between an action before and after an event and ticket purchase of the past, for example.

Then, the recommendation system 21 analyzes the input information, and for example, finds a condition that increases the event participation rate and the repeat rate of each user, and outputs recommendation information to each user at an appropriate timing. Here, the recommendation information includes an action plan that is recommended in the event and before and after the event (for example, recommended facility, seat, store staff, etc.), for example.

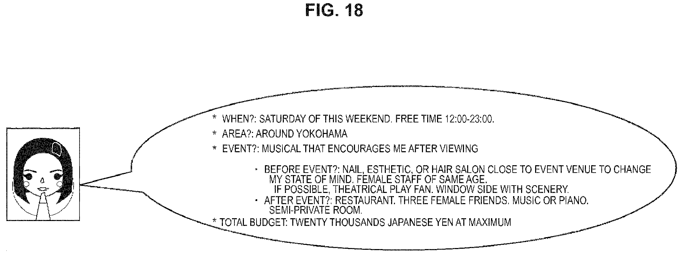

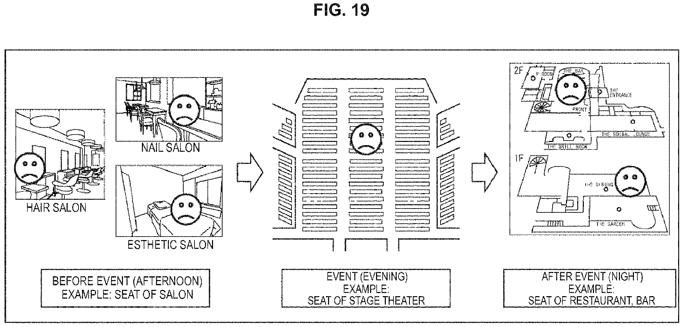

Here, with reference to FIGS. 18 and 19, an example in which a female user in her 40's desires to appreciate a musical will be described.

For example, the user simply inputs a condition that he or she desires into a free format illustrated in FIG. 18, using the information presenting unit 22.

In this example, a desired date and time (12:00 to 23:00 on Saturday of this weekend), a desired area (around Yokohama), a desired event type and atmosphere (a musical that encourages me after viewing), and a total budget (twenty thousand Japanese yen at the maximum) are given as the condition. Also, as a desired action plan before the event, a desired site (close to event venue), a desired action and facility type (salon), a desired store staff (a female staff of the same age, who likes a theatrical play), and a desired seat (window side from which a scenery is viewed) are given as the condition. Further, as a desired action plan after the event, a desired action and facility type (restaurant), the number of participants (three female friends), a desired store (music or piano), and a desired seat (semi-private room) are given as the condition.

In response, the recommendation system 21 recommends an action plan in the event and before and after the event, as illustrated in FIG. 19.

For example, a musical held in the date and time and the area that are desired and a seat in the stage theater is recommended. Then, as an action plan before appreciating the musical, a seat of sunny window side of a hair salon, a nail salon, and an esthetic salon close to of the stage theater, where there is a salon staff member who likes a theatrical play and has a high skill and is talkative, is recommended to heighten the state of mind before appreciating. Also, as a plan after appreciating the musical, seats of a semi-private room in a close restaurant and piano bar, where three females can talk about a recent event and look back on the appreciated play, is recommended.

In this case, as schematically illustrated in the drawing, an image relevant to the seat recommended in the action plan in the event and before and after the event is presented to the user. For example, an image illustrating the situation and the recommended seat (the seat on which a face mark is displayed in the image) inside each salon recommend before appreciating the musical is presented to the user. Also, for example, an image illustrating the seating chart and the recommended seat (the seat on which a face mark is displayed in the image) of the stage theater where the musical is held is presented to the user. Further, for example, an image illustrating the seating chart and the recommended seat (the seat on which a face mark is displayed in the image) of the restaurant recommended after appreciating the musical is presented to the user.

Also, although a detailed description is omitted, a counter seat of a ramen shop that is away from the baseball stadium and known only to limited people, where one can talk about baseball deeply with a shop master who was a player of a farm team of the baseball club, can be recommended for a male fan of a specific baseball club, after he watches a night game of the baseball club, for example.

As described above, not only the event, but also the action plan before and after the event is recommended in addition to the site and the seat, in order to heighten the motivation for participating the event, and to raise the purchase rate of the ticket. Also, the user can obtain an added value fitted to each person efficiently within a limited time, and spend a high quality time of a higher degree of satisfaction, as compared with enjoying the event only. Thereby, the motivation of going to the event again is raised, so that the repeat rate is increased.

Returning to FIG. 17, and for example, the recommendation system 21 can output strategy information for sales promotion provided to a host (for example, a promoter, etc.) of an event, a ticket sales business operator, an owner of each store that is a recommendation target of an action plan before and after an event, and the like. This strategy information includes event information, store information, and a method for providing user with information of those seats, information indicating a relationship between an action before and after the event and ticket purchase (for example, booking information of an action plan of a high event participation rate), and the like, for example.

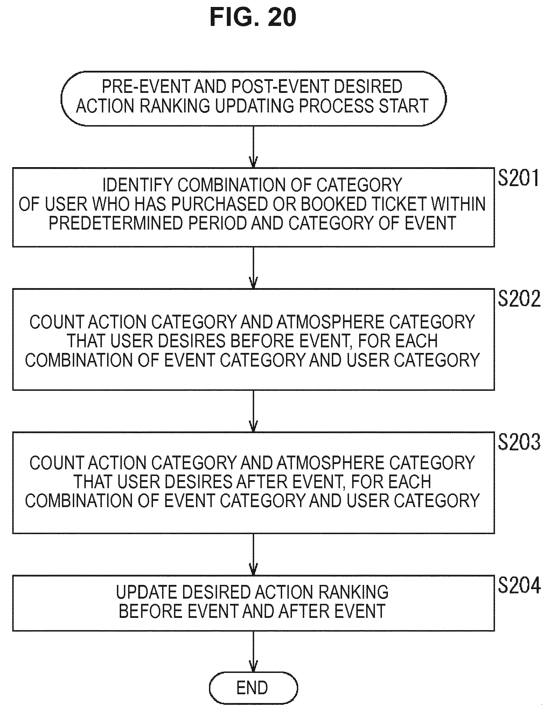

Next, with reference to FIGS. 20 to 30, a specific process for recommending an action plan before and after the event will be described.

### (Desired Action Ranking Updating Process Before and After Event)

First, with reference to the flowchart of FIG. 20, a pre-event and post-event desired action ranking updating process will be described. Note that this process is executed on a regular basis, for example.

In step S201, the information analyzing unit 55 identifies the combination of the category of the user who has purchased or booked a ticket within a predetermined period and the category of the event. Specifically, the information analyzing unit 55 extracts the purchase history of each user from a predetermined period before up to the present moment, from the purchase history information DB 28. Then, the information analyzing unit 55 identifies the combination of the user category of the user who has purchased or booked the ticket and the event category of the target event, with respect to all purchase history within the period.

For example, the information analyzing unit 55 identifies the user category of each user, on the basis of the information of the user profile DB 27 and the information of the purchase history information DB 28. For example, the user category is classified on the basis of user attributes such as age group, gender, place of origin, and educational background, and preference and action pattern based on the purchase history of the user, and the like. Note that, in the following, an example in which the user category is classified on the basis of the combination of age group and gender will be described.

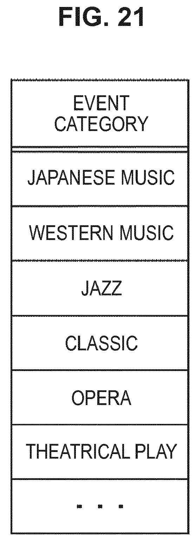

Also, the information analyzing unit 55 identifies the event category of each event in accordance with the classification illustrated in FIG. 21, for example. In this example, the event category is classified into Japanese music, Western music, jazz, classic, opera, play, and others. Note that the classification method of the event category is not limited to this example, but the event category can be classified in accordance with any criterion.

In step S202, the information analyzing unit 55 counts the action category and the atmosphere category that the users desires before the event, for each combination of the event category and the user category. That is, the information analyzing unit 55 counts the category of the action and the category of the atmosphere that the users who have purchased or booked the tickets within the above period desires before the event, with respect to each combination of the event category and the user category. Note that this count is performed on the basis of information such as questionnaire input by the users when purchasing or booking the tickets, for example.

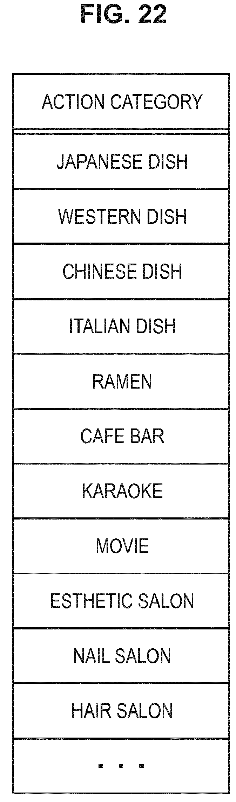

FIG. 22 illustrates a classification example of the action category. In this example, the action category is classified into food, karaoke, movie, salon, and others. Also, the food is further classified into Japanese dish, Western dish, Chinese dish, Italian dish, ramen, cafe bar, depending on cuisine or restaurant genre. The salon is classified into esthetic salon, nail salon, hair salon, depending on salon type. Note that the classification method of the action category is not limited to this example, but the action category can be classified in accordance with any criterion.

Also, the atmosphere category is classified into atmospheres such as "buzzing", "long time", and "relaxed manner", for example. Note that the atmosphere category is not limited to this example, but can be classified in accordance with any criterion.

In step S203, the information analyzing unit 55 counts the action category and the atmosphere category that the users desire after the event, for each combination of the event category and the user category, through the same process as step S202.

In step S204, the information analyzing unit 55 updates the desired action ranking before the event and after the event, on the basis of the previous count result. Here, the desired action ranking is a ranking of the combination of the action category and the atmosphere category of the action that the users desire to enjoy before the event or after the event.

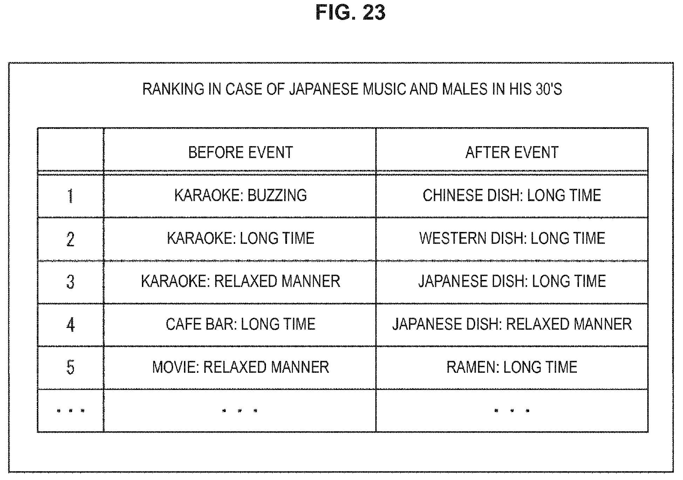

FIG. 23 illustrates an example of the desired action ranking before the event and after the event, when the event category is Japanese music and the user category is male in his 30's. In this example, the combination of the action category "karaoke" and the atmosphere category "buzzing" is at the first place in the desired action ranking before the event. That is, it is indicated that males in his 30's who participate an event of Japanese music desire most to spend time festively at karaoke before the event, for example. Subsequently, the combination of "karaoke" and "long time" is at the second place, and the combination of "karaoke" and "relaxed manner" is at the third place, and the combination of "cafe bar" and "long time" is at the fourth place, and the combination of "movie" and "long time" is at the fifth place.

On the other hand, in the desired action ranking after the event, the combination of the action category "Chinese" and the atmosphere category "long time" is at the first place. That is, it is indicated that males in his 30's who participate events of Japanese music desire most to enjoy conversation in a long time while eating Chinese dishes after the event, for example. Subsequently, the combination of "Western dish" and "long time" is at the second place, and the combination of "Japanese dish" and "relaxed manner" is at the third place, and the combination of "Japanese dish" and "relaxed manner" is at the fourth place, and the combination of "ramen" and "long time" is at the fifth place.

Then, the information analyzing unit 55 stores the updated desired action ranking in the action plan DB 30.

Thereafter, the pre-event and post-event desired action ranking updating process ends.

In this way, a tendency of the action category and the atmosphere that each user desires before the event and after the event is known with respect to the combination of the participated event and the user.

Note that, for example, the ranking of each event category and the ranking of each user category may be created. Also, for example, the ranking of the action category only and the ranking of the atmosphere category only may be created. Further, the above categories and their combination is an example, and other categories and combinations of the other categories may be used.

### (Pre-Event Action Plan Recommending Process)

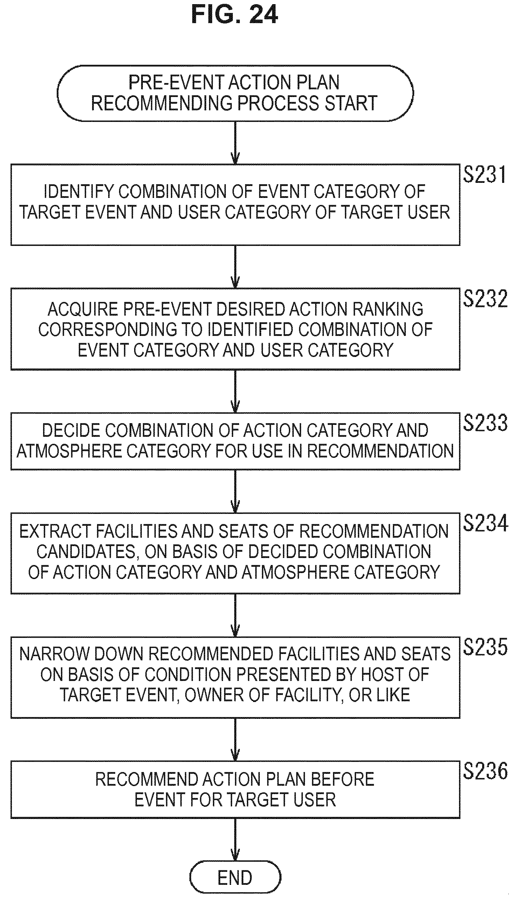

Thereafter, with reference to the flowchart of FIG. 24, a pre-event action plan recommending process executed by the information processing system 11 will be described.

Note that, this process is executed when the target user purchases or books a ticket of the target event, when browsing the information relevant to the target event, or when recommending the target event for the target user, for example. Alternatively, this process is executed at a predetermined timing (for example, immediately before the day the target event or on the day, etc.) after the target user purchases or books a ticket of the target event, for example.

In step S231, the recommending unit 53 identifies the combination of the event category of the target event and the user category of the target user. Note that the classification of the event category and the user category is same as the above desired action ranking updating process.

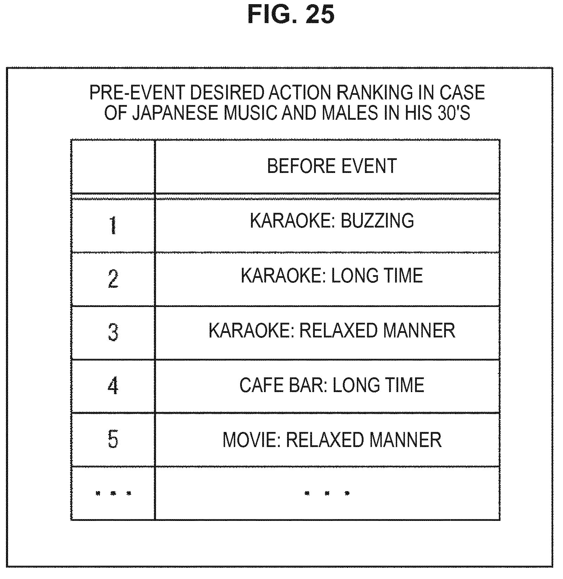

In step S232, the recommending unit 53 acquires a pre-event desired action ranking corresponding to the identified combination of the event category and the user category, from the action plan DB 30. For example, when the target user is a male in his 30's, and the target event is a concert of an artist that belongs to the event category "Japanese music", the pre-event desired action ranking for the combination of the event category "Japanese music" and the user category "male in his 30's" illustrated in FIG 25 is acquired.

In step S233, the recommending unit 53 decides the combination of the action category and the atmosphere category used in the recommendation. For example, when the condition is not specified particularly from the target user, the recommending unit 53 employs the combination of the action category at high places in the pre-event desired action ranking acquired in the process of step S232 and the atmosphere category. For example, the combinations of the action categories at the first to fifth places of the pre-event desired action ranking of FIG. 25 and the atmosphere category are employed.

On the other hand, when the condition is specified by the target user, the recommending unit 53 employs the combination of one or more action categories and the atmosphere category that satisfies the specified condition.

In step S234, the recommending unit 53 extracts facilities and seats of recommendation candidates, on the basis of the combination of the decided action category and the atmosphere category. Specifically, the recommending unit 53 extracts facilities and seats of candidates that are recommended for the target user, from a facility DB retained by the action plan DB 30.

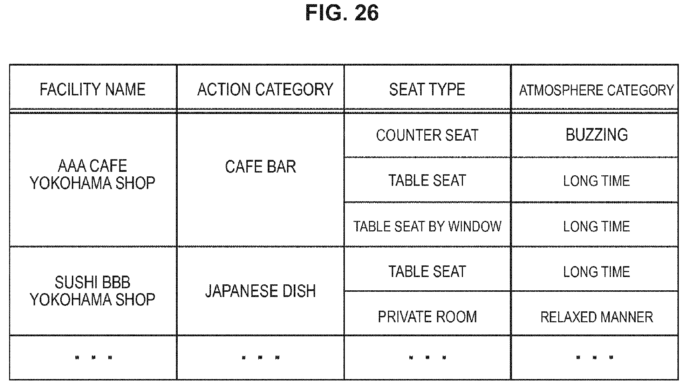

FIG. 26 illustrates an example of the data configuration of the facility DB. The facility DB retains information relevant to facilities (for example, store, amusement facility, public facility, etc.) utilizable in the action plan that can be recommended for the target user. The facility DB includes at least four items of facility name, action category, seat type, and atmosphere category.

The facility name indicates the name of each facility. For example, in the case of a store name, a branch store name is also registered.

The action category indicates a category of an action that can be performed at each facility, and one or more action categories described above with reference to FIG 22 are set.

The seat type indicates types of seats provided in each facility. For example, the seat type is classified into counter seat, table seat, private room, semi-private room, window side seat, smoking seat, non-smoking seat, and others.

The atmosphere category indicates the category that represents the atmosphere of each seat type of each facility, and one or more above atmosphere categories are set. For example, a seat of a vast room where one can fuss is set to the atmosphere category "buzzing", and a quiet seat where one can converse in a long time is set to the atmosphere category "long time", and a private room where one can relax is set to the atmosphere category "relaxed manner".

For example, in the facility DB of FIG. 26, the facility "AAA cafe Yokohama shop" that belongs to the action category "cafe bar", and the facility "sushi BBB Yokohama shop" that belongs to the action category "Japanese dish" are registered. Also, "AAA cafe" includes counter seats that belong to the atmosphere category "buzzing", table seat that belongs to the atmosphere category "long time", and table seats by the window that belong to the atmosphere category "long time". "sushi BBB" includes table seats that belong to the atmosphere category "long time" and private rooms that belong to the atmosphere category "relaxed manner".

Also, for example, facility general information such as address, telephone number, e-mail address, operating hours, price, menu, and access method, as well as information such as booking situation, atmosphere and feature of facility and employee, may be registered in the facility DB. Note that these kinds of information may be purchased from the website of each facility, without registering in the facility DB. Also, the atmosphere and the feature of the facility and the employee are not only information provided from the facility side, but may be collected from articles and user's words of mouth, and evaluations posted on websites, social media, and the like, for example.

The recommending unit 53 extracts the facilities and the seats that match the condition of the combination of the action category and the atmosphere category decided in the process of step S233, from the facility DB. For example, when the combination of the action category "cafe bar" and the atmosphere category "buzzing" is given as the condition, the counter seat of AAA cafe Yokohama shop is extracted from the facility DB of FIG. 26.

Then, the recommending unit 53 further extracts the facilities and the seats that satisfy the condition specified by the target user, from among the extracted facilities and seats. For example, the facilities and the seats that are in the area specified by the user and can be booked at the specified date and time are extracted. Also, for example, when the seat type is specified by the target user, the facilities including the specified seat type are extracted. Further, for example, when the feature of the facility or the employee is specified as the condition, the facilities having the specified feature or the facilities in which employees having the specified feature are present are extracted.

In step S235, the recommending unit 53 narrows down the recommended facilities and seats, on the basis of the condition presented by the host of the target event and the owner of the facility. Here, the condition presented by the host of the target event and the owner of the facility is priorities of the recommended facilities and seats, for example. For example, the facilities and the seats for which high priorities are set are selected preferentially from among the facilities and the seats extracted in the process of step S234.

For example, when there is a facility that associates with the host of the target event, the priority of the facility is set high. Also, for example, the priority of the facility is set high, when the facility that contributes to the improvement of the participation rate of the event is found by analyzing the data of the booking information of each facility and the purchase history of the ticket of the event of the past. The facility that contributes to increase of the participation rate of the event is, for example, a facility of a high probability that the user booking the facility participates the event, and a facility of a high booking rate by the event participants before the event.

In step S236, the information processing system 11 recommends the action plan before the event for the target user. Specifically, the presentation control unit 56 generates pre-event action plan information for recommending the action plan before the event for the target user. The pre-event action plan information includes information such as facility, seat, and bookable time, which are recommended for the target user, for example. Then, the presentation control unit 56 transmits the generated pre-event action plan information to the information presenting unit 22 utilized by the target user.

The information presenting unit 22 presents the information relevant to the recommended action plan to the target user, on the basis of the received pre-event action plan information. Note that, as the method for presenting the information, any method can be employed in the same way as in recommending the event and the seat in step S104 of the above FIG. 6.

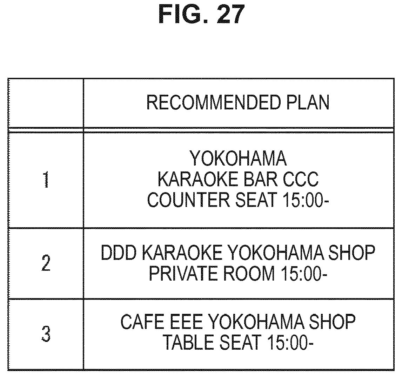

For example, in this case, FIG. 27 illustrates an example of the information presented in the information presenting unit 22 of the target user. In this example, as a recommended plan before the target event, a list of recommended facility names (store name), seat types, times that can be booked are displayed in the order of recommendation.

Note that, in this case, discount information when participating the target event (for example, a person who participates the target event is discounted by 20 %, etc.) may be presented simultaneously. Thereby, the participation rate of the target event and the booking rate of the presented action plan are expected to increase.

Thereafter, the pre-event action plan recommending process ends.

### (Post-Event Action Plan Recommending Process)

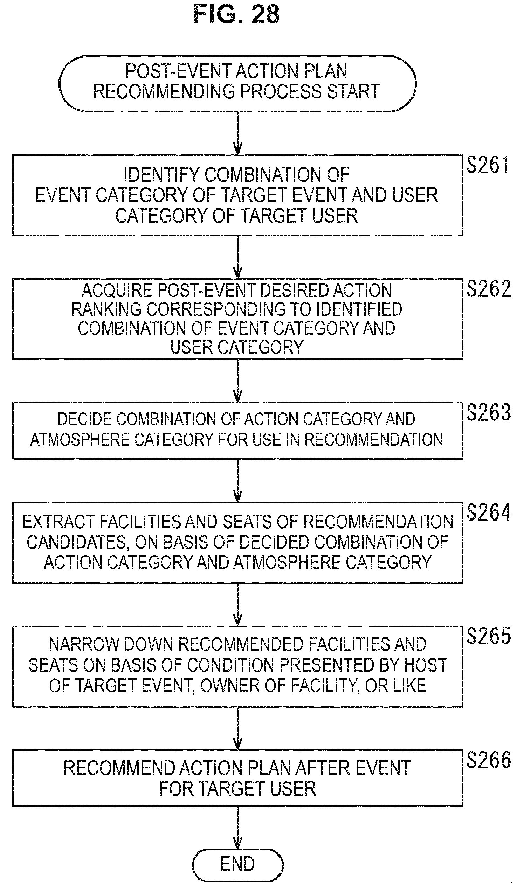

Next, with reference to the flowchart of FIG. 28, a post-event action plan recommending process executed by the information processing system 11 will be described.

Note that, this process is executed when the target user purchases or books a ticket of the target event, when browsing the information relevant to the target event, or when recommending the target event for the target user, for example. Alternatively, this process is executed at a predetermined timing (for example, immediately before the day the target event or on the day, etc.) after the target user purchases or books a ticket of the target event, for example.

In step S261, in the same way as the process of step S231 of FIG. 24, the combination of the event category of the target event and the user category of the target user is identified.

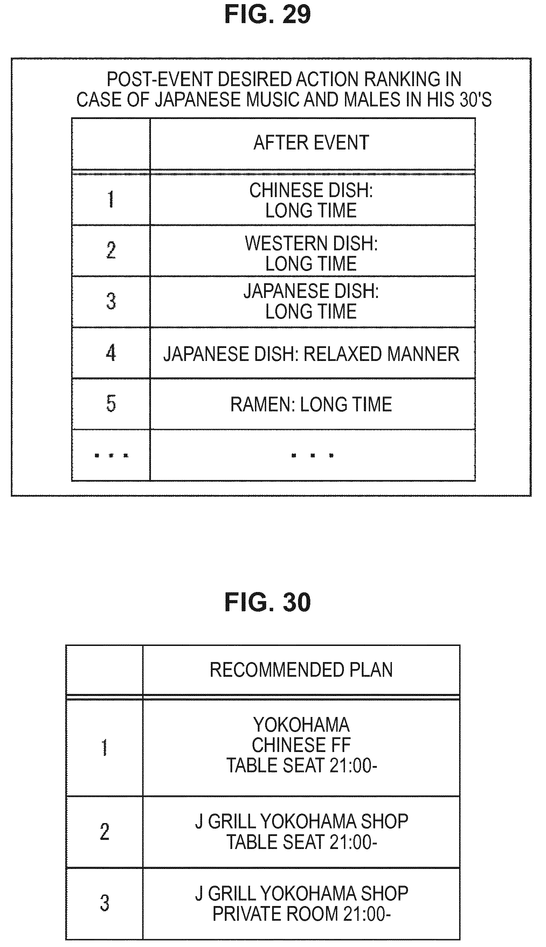

In step S262, the recommending unit 53 acquires a post-event desired action ranking corresponding to the identified combination of the event category and the user category, from the action plan DB 30. For example, when the target user is a male in his 30's, and the target event is a concert of the artist that belongs to the event category "Japanese music", a post-event desired action ranking for the combination of the event category "Japanese music" and the user category "male in his 30's" illustrated in FIG. 29 is acquired.

In step S263, in the same way as the process of step S233 of FIG. 24, the combination of the action category and the atmosphere category used in the recommendation is decided.

In step S264, in the same way as the process of step S234 of FIG. 24, the facilities and the seats of recommendation candidates are extracted on the basis of the decided combination of the action category and the atmosphere category.

In step S265, in the same way as the process of step S235 of FIG. 24, the recommended facilities and seats are narrowed down, on the basis of the condition presented by the host of the target event and the owner of the facility.

In step S266, in the same way as the process of step S236 of FIG. 24, the action plan after the event is recommended for the target user. FIG. 30 is the similar diagram as FIG. 27, and in this case illustrates an example of the information presented to the information presenting unit 22 of target user. Note that, as illustrated in this diagram, a different seat type of the same facility is presented as another plan.

Thereafter, the post-event action plan recommending process ends.

As described above, an action in the event and before and after the event fitted to each user is recommended as a total plan. Thereby, the participation motivation to the event of the user is increased, and the purchase rate of the ticket is increased. Also, the utilization rate of the recommended facility improves.

Also, the user simply finds and books an action plan that fits to the own condition and preference. In addition, the user meaningfully spends not only the event but also the time until the event starts and the time after the event ends, and increases overall degree of satisfaction. As a result, the motivation participate an event again is increased, and the repeat rate is increased.

### (Exemplary Variant)

Here, an exemplary variant of the above recommendation process of the action plan before and after the event will be described.

Although, in the above description, an example in which the pre-event action plan recommending process and the post-event action plan recommending process are performed individually is illustrated, the two processes may be performed simultaneously to recommend the action plan before the event and after the event.

Also, the action plan before the event and after the event may be recommended together with the target event, or may be recommended at a different timing from the target event. Also, when recommended together with the target event, only any one of the action plan before the event or the action plan after the event may be recommended. Further, the action plan before and after the target event may be recommended, after the target user has purchased or booked the ticket of the target event.

Also, the content of the recommended action plan may be changed depending on recommended period. For example, when recommending on the day of the target event, the condition such as weather and air temperature of the day can be added, to change the action category and the atmosphere category used in the recommendation, and to change the range of the area of the recommended facility.

Further, the action plan after the target event can be recommended at timings of before the start of the target event, in the middle of the target event, and after the end of the target event, and it is possible that the state of mind of the target user changes at each timing. Thus, assuming the change of the state of mind, the action category and the atmosphere category used in the recommendation may be changed, depending on the recommendation timing, for example.

Also, for example, when recommending the action plan after the end of the target event, it is assumed that the state of mind of the target user at the time is affected by the situation of the participated target event. The situation of the target event is, for example, whether or not the target event is exciting, whether the target event is prolonged or finishes early, whether or not a favorite team wins if the target event is a sport event, and the like. Thus, for example, the action category and the atmosphere category used in the recommendation may be changed, depending on the situation of the target event.

Also, for example, not only a single action, but an action plan including two or more actions that are different in time may be recommended. For example, an action plan including a seat of a restaurant where one can eat after the target event and a seat of a karaoke to which one moves after eating may be recommended.

Further, the recommended action plan is not necessarily limited to the action plan immediately after or immediately before the target event. For example, a seat or a room of a relaxation salon that one goes after eating after the end of the target event can be recommended, and a room of a hotel that one lodges can be recommended.

Also, the recommended action plan is not necessarily targeted on the same day as the target event. For example, a room of a hotel that one lodges on the previous day of the target event and a seat of a restaurant can be recommended, and a seat of a restaurant of the next day of the target event can be recommended, for the user that participates the target event from a remote place.

Also, the above categories and their combination are just examples, and a combination of another category and another category can be used.

Further, the desired action ranking before and after the event may be updated on the basis of the booking situation of the action plans before and after the event of the actual each user, for example.

Also, although, in the above description, an example in which the desired action ranking is created for each user category has been illustrated, a desired action ranking may be created for each user, for example. For example, the desired action ranking of each user can be created and updated on the basis of a preliminary questionnaire by the user, preference information of the user, and comments or a like to a social media or the like of the user. Also, for example, the desired action ranking of each user may be updated on the basis of the history of the action plan that is actually booked by the user. Then, the action plan that is more fitted to each user can be recommended, using the desired action ranking of each this user.

Further, for example, a service associating the target event and the action plan can be provided. For example, a special service related to the target event may be provided in the facility that is utilized in the action plan. For example, it is envisaged that a service such as a specialty dish that appears in a play and a movie which is the target event is served at a discounted price to an event participant in a restaurant utilized in the recommended action plan. Thereby, synergy effect of the target event and the action plan is increased.

### [Process Relevant to Sale Strategy]

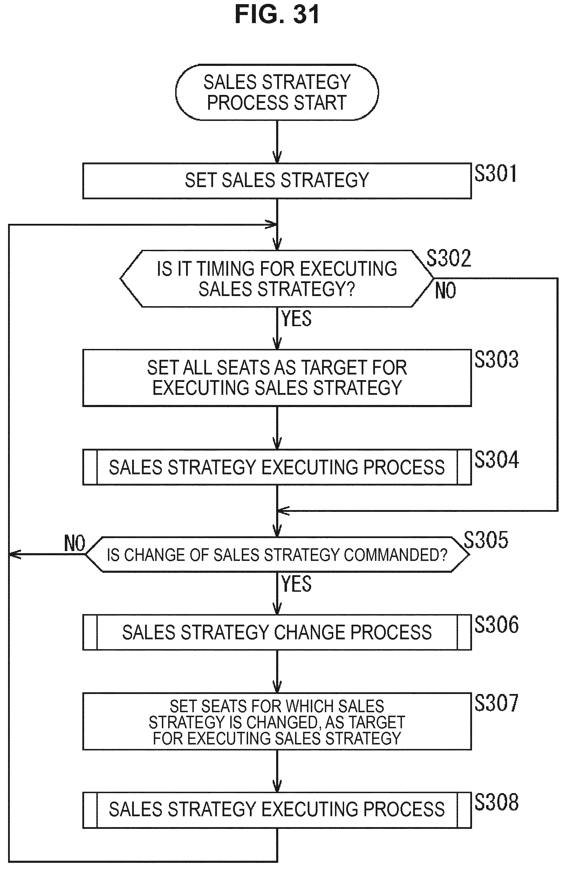

Next, with reference to FIGS. 31 to 37, a process relevant to the sales strategy will be described.

As described below, the host or the like of the event sets and executes a sales strategy of the ticket of the event for each seat, utilizing the recommendation system 21, and changes as appropriate in response to the sales situation.

### (Sale Strategy Process)

Here, with reference to the flowchart of FIG. 31, a sales strategy process executed by the information processing system 11 will be described.

Note that, for example, this process starts when the host of the target event or the like inputs a command for setting a sales strategy, using the information presenting unit 23. Also, for example, this process is executed until the ticket sales of the target event ends.

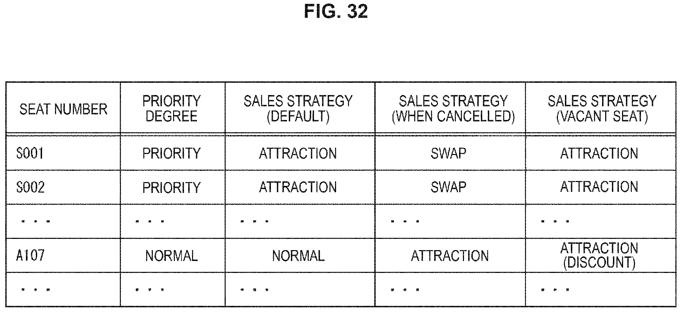

In step S301, the information processing system 11 sets a sales strategy. Specifically, the information presenting unit 23 transmits a command for setting a sales strategy input by the host or the like, to the recommendation system 21. The sales strategy setting unit 54 of the recommendation system 21 generates sales strategy information on the basis of the received command, and stores it in the host profile DB 29. This sales strategy information includes information indicating a timing for executing the sales strategy and a sales strategy table illustrated in FIG. 32, for example.

The sales strategy table includes each item of seat number, priority, sales strategy (default), sales strategy (when cancelled), and sales strategy (vacant seat), for example.

The seat number indicates the seat number of each seat of the venue of the target event.

The priority indicates a priority order for selling each seat, and for example is set to one value of "priority" or "normal". Then, a seat whose priority is set to "priority" (hereinafter, referred to as a priority sale seat) is sold in priority to a seat whose priority is set to "normal" (hereinafter, referred to as a normal sale seat). For example, when a seat is recommended for the user, the priority sale seat is recommended in priority to the normal sale seat.

Note that the priority may be classified into levels of three or more steps.

Sales strategy (default), sales strategy (when cancelled), and sales strategy (vacant seat) indicate sales strategies applied to each seat. The sales strategy (default) indicates a sales strategy that is normally executed. The sales strategy (when cancelled) indicates a sales strategy executed when cancellation occurs. The sales strategy (vacant seat) can set a deadline, and is a sales strategy executed when there are vacant seats even after the set deadline, for example.

The sales strategy is set from among four types including "attraction", "attraction (discount)", "swap", and "normal", for example.

A seat whose sales strategy is set to "attraction" (hereinafter, referred to as an attraction seat) is a target that is recommended for the user in the above event recommending process, for example.

A seat whose sales strategy is set to "attraction (discount)" (hereinafter, referred to as an attraction discount seat) is a target that is recommended for the user in the above event recommending process and a discount target of the ticket price, for example.

A seat whose sales strategy is set to "swap" (hereinafter, referred to as a swap seat) is a target that is recommended as a seat to be changed from the seat that has already been purchased, for the user who has already purchased the ticket, in the above event recommending process, for example.

A seat whose sales strategy is set to "normal" (hereinafter, referred to as a normal strategy seat) is not a target that is recommended for the user in the event recommending process, for example.

For example, as for the seat of the seat number "S001", the priority is set to "priority", and the sales strategy (default) is set to "attraction", and the sales strategy (when cancelled) is set to "swap", and the sales strategy (vacant seat) is set to "attraction". Also, for example, as for the seat of the seat number "A107" the priority is set to "normal", and the sales strategy (default) is set to "normal", and the sales strategy (when cancelled) is set to "attraction", and the sales strategy (vacant seat) is set to "attraction (discount)".

Note that the types of the sales strategy described above are just examples, and for example another sales strategy can be added, or alternatively the number can be reduced.

In step S302, the recommending unit 53 determines whether or not it is a timing for executing the sales strategy. If it is determined that it is the timing for executing the sales strategy, the process proceeds to step S303.

In step S303, the recommending unit 53 sets all seats of the target event as targets for executing the sales strategy.

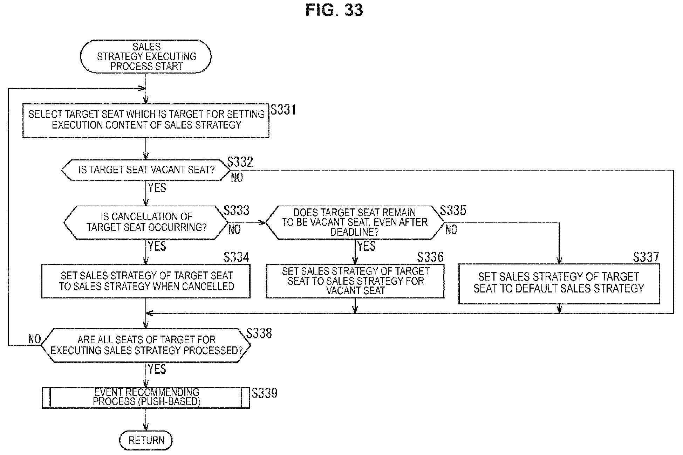

In step S304, the recommending unit 53 executes a sales strategy executing process, and thereafter the process proceeds to step S305. Here, with reference to FIG. 33, the detail of the sales strategy executing process will be described.

In step S331, the recommending unit 53 selects a target seat which is the target for setting the execution content of the sales strategy. That is, the recommending unit 53 selects, and sets as the target seat, one seat for which the execution content of the sales strategy is not set, from among the seats of the target for executing the sales strategy.

In step S332, the recommending unit 53 determines whether or not the target seat is a vacant seat. If it is determined that the target seat is a vacant seat, the process proceeds to step S333.

In step S333, the recommending unit 53 determines whether or not cancellation of the target seat has occurred. If it is determined that the cancellation of the target seat has occurred, the process proceeds to step S334.

In step S334, the recommending unit 53 sets the sales strategy of the target seat to the sales strategy when cancelled, on the basis of the sales strategy table of the target event.

Thereafter, the process proceeds to step S338.

On the other hand, in step S333, if it is determined that the cancellation of the target seat has not occurred, the process proceeds to step S335.

In step S335, the recommending unit 53 determines whether or not the target seat remains to be a vacant seat even after a deadline. If the deadline set for the sales strategy for the vacancy of the target seat is already passed at the current time point, the recommending unit 53 determines that the target seat remains to be a vacant seat even after the deadline, and the process proceeds to step S336.

In step S336, the recommending unit 53 sets the sales strategy of the target seat to the sales strategy when cancelled, on the basis of the sales strategy table of the target event.

Thereafter, the process proceeds to step S338.

On the other hand, in step S335, if it is determined that the deadline set for the sales strategy for the vacancy of the target seat has not been passed yet, the process proceeds to step S337.

In step S337, the recommending unit 53 sets the sales strategy of the target seat to the default sales strategy, on the basis of the sales strategy table of the target event.

Thereafter, the process proceeds to step S338.

On the other hand, in step S332, if it is determined that the target seat is not a vacant seat, the processes of steps S333 to S337 are skipped, and the process proceeds to step S338. That is, the target seat is already reserved, and therefore the sales strategy is not set.

In step S338, the recommending unit 53 determines whether or not all seats of the target for executing the sales strategy are processed. If it is determined that all seats of the target for executing the sales strategy are not processed yet, the process returns to step S331.

Thereafter, until it is determined that all seats of the target for executing the sales strategy are processed in step S338, the processes of steps S331 to S338 are executed repeatedly. Thereby, the execution content of the sales strategy is set for all vacant seats included in the seats set as the target for executing the sales strategy.

On the other hand, in step S338, if it is determined that all seats of the target for executing the sales strategy are processed, the process proceeds to step S339.

In step S339, the push-based event recommending process described above with reference to FIG. 6 is executed. Thereby, for example, the seat set as the attraction seat and the attraction discount seat is recommended for the user having the feature that fits to the feature of the seat, in addition to the target event. Also, for example, the seat set as the swap seat is recommended for the user who has the feature that fits to the feature of the seat and has already purchased another seat.

Thereafter, the sales strategy executing process ends.

Returning to FIG. 31, in step S302, if it is determined that it is not a timing for executing the sales strategy, the processes of step S303 and S304 are skipped, and the process proceeds to step S305.

In step S305, the sales strategy setting unit 54 determines whether or not the change of the sales strategy is commanded. If it is determined that the change of the sales strategy is not commanded, the process returns to step S302. Thereafter, in step S305, until it is determined that the change of the sales strategy is commanded, the processes of steps S302 to S305 are executed repeatedly.

On the other hand, in step S305, for example, if the sales strategy setting unit 54 receives the command for the change of the sales strategy input by the host or the like from the information presenting unit 23, it is determined that the change of the sales strategy is commanded, and the process proceeds to step S306.

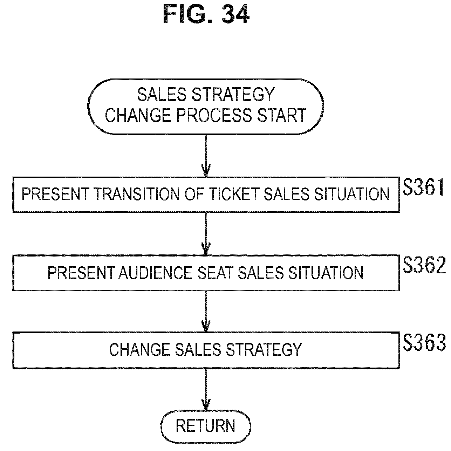

In step S306, the information processing system 11 executes the sales strategy change process. Here, with reference to FIG. 34, the detail of the sales strategy change process will be described.

In step S361, the information processing system 11 presents the transition of the sales situation of the ticket. Specifically, the information analyzing unit 55 performs the count of the sales situation of the tickets of the target event, on the basis of the purchase history information retained in the purchase history information DB 28. For example, the information analyzing unit 55 counts the number of sales of the tickets of the target event on each day.

The presentation control unit 56 generates ticket sales situation information for presenting the transition of the sales situation of the tickets of the target event, on the basis of the count result by the information analyzing unit 55, and transmits it to the information presenting unit 23. The information presenting unit 23 presents the transition of the sales situation of the tickets of the target event, on the basis of the received ticket sales situation information.

In step S362, the information processing system 11 presents audience seat sales situation. Specifically, when the command for presenting the audience seat sales situation is input by the host or the like, the information presenting unit 23 transmits the command to the recommendation system 21.

The information analyzing unit 55 of the recommendation system 21 performs the count of the audience seat sales situation of the target event of the present moment, on the basis of the information contained in the audience seat sales situation DB 26. For example, the information analyzing unit 55 performs the count in terms of whether each seat of the target event is reserved, vacant, or cancelled.

Also, the information analyzing unit 55 collects the information indicating the features of the users assigned to the seats that are already reserved, from the user profile DB 27, and classifies the users into a plurality of types. In this case, a criterion for classifying the types of the users is specified by the host or the like. For example, the type of the user is classified on the basis of at least one of user attribute, physical feature, feature relevant to preference, and feature relevant to how to view an event.

The presentation control unit 56 generates audience seat sales situation information for presenting the audience seat sales situation of the target event at the present moment, on the basis of the count result of the information analyzing unit 55, and transmits it to the information presenting unit 23. The information presenting unit 23 presents the audience seat sales situation of the target event on the basis of the received audience seat sales situation information.

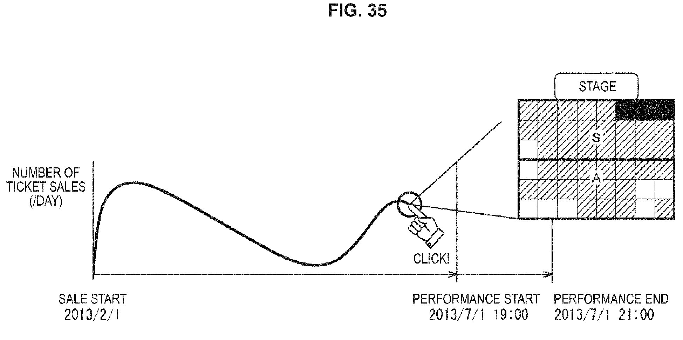

FIG. 35 illustrates an example of a screen image presented in the information presenting unit 23 in the processes of step S361 and S362. In this example, a graph illustrating the transition of the number of sales of the tickets of the target even on each day from a ticket sales start day to the present moment is displayed.

Then, for example, when the graph is clicked, an image illustrating the audience seat sales situation at the present moment pops up to be displayed. For example, a diagram illustrating the arrangement of the stage and audience seats schematically is displayed, and each seat is displayed and classified into reserved seat, vacant seat, and cancelled seat. For example, in this example, a reserved seat is illustrated with hatched lines, and a vacant seat is painted in white, and a cancelled seat is painted in black.

Note that an image illustrating the audience seat sales situation at this present moment can automatically pop up to be displayed when the cancellation of the audience seat occurs.

Thereby, the host or the like can confirm the transition, up to now, of the number of sales of the tickets and the audience seat sales situation at the present moment, at a sight.

Also, for example, the seat that is already reserved may be displayed in a distinguishable manner by different colors or the like for each type of the user assigned to each seat. For example, excited user and calm user, male and female, different age groups, or the like may be displayed in a distinguishable manner. Thereby, the host or the like can easily confirm the distribution of the seats for different audience types, and for example can consider a strategy such as which type of users are to be attracted to which seats, in order to make the event exciting.

In step S363, the information processing system 11 changes the sales strategy. Specifically, for example, the host or the like specifies the seats for changing the sales strategy, and inputs a command for changing the sales strategy of the specified seats, into the information presenting unit 23. The information presenting unit 23 transmits the input command to the recommendation system 21.

The sales strategy setting unit 54 of the recommendation system 21 changes the sales strategy of the specified seats in the sales strategy table of the target event retained in the host profile DB 29, on the basis of the received command. In this case, the sales strategy of a plurality of seats can be change together.

Thereafter, the sales strategy change process ends.

Returning to FIG. 31, in step S307, the recommending unit 53 sets the seats for which the sales strategy is changed, as the target for executing the sales strategy.

In step S308, the sales strategy executing process is executed, in the same way as the process of step S304. That is, the sales strategy after the change is executed to the seats for which the sales strategy is changed.

Thereafter, the process returns to step S302, and the processes in or after step S302 are executed.

As described above, the host or the like sets and executes the sales strategy according to each seat for each seat in a simple manner.

Also, the host or the like confirms the sales situation of tickets and audience seats, and changes and executes the sales strategy of each seat at real time. For example, when the sales of the tickets is not good, the attraction seats and the attraction discount seats are increased, and the users are attracted to the target event proactively by means such as e-mail delivery. Also, for example, when the cancellation occurs immediately before the event, attraction to a better seat can be performed for the user who has already purchased a ticket already.

### [Sales Situation Transition Presenting Process]

Also, the recommendation system 21 presents the transition of the sales situation of the ticket and the seat in more detail than when presenting in the above sales strategy change process, and supports the analysis of the fluctuation factor of the sales of the tickets and the like.

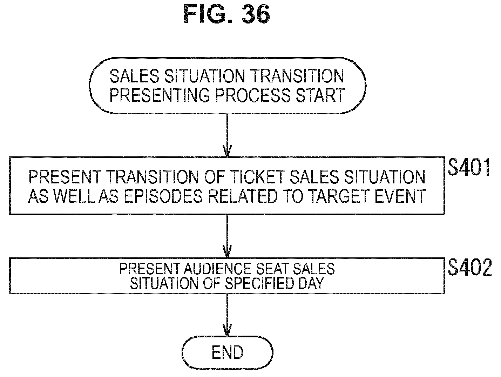

Here, with reference to the flowchart of FIG. 36, a sales situation transition presenting process executed by the information processing system 11 will be described. Note that, for example, this process is started when the command for presenting the transition of the sales situation of the target event by the host of the target event or the like, which is the target for presenting the transition of the sales situation, is input into the information presenting unit 23, and the command is transmitted from the information presenting unit 23 to the recommendation system 21.

In step S401, the information processing system 11 presents the transition of the sales situation of the tickets, in addition to episodes related to the target event. Specifically, the information analyzing unit 55 performs the count of the sales situation of the tickets of the target event, by the same process as step S361 of FIG. 34.

Also, the presentation control unit 56 collects, from the host profile DB 29, information relevant to the episodes that possibly affect the sales of the tickets mainly, among the episodes related to the target event. For example, the presentation control unit 56 collects the information relevant to the motion of the ticket sales of the target event, the motion of the promotion, the motion of the cast members of the target event, or the like, from the host profile DB 29.

The presentation control unit 56 generates ticket sales situation information for presenting the transition of the sales situation of the tickets together with the episodes related to the target event, on the basis of the count result by the information analyzing unit 55 and the information collected by itself, and transmits it to the information presenting unit 23. The information presenting unit 23 presents the transition of the sales situation of the tickets as well as the episodes related to the target event, on the basis of the received ticket sales situation information.

In step S402, the information processing system 11 presents the audience seat sales situation of a specified day. Specifically, when the day on which the audience seat sales situation is presented is specified by the host, the information presenting unit 23 transmits the information indicating the specified day to the recommendation system 21.

The information analyzing unit 55 of the recommendation system 21 performs the count of the audience seat sales situation of the target event of the specified day, by the same process as step S362 of the above FIG. 34.

The presentation control unit 56 generates audience seat sales situation information for presenting the audience seat sales situation of the target event of the specified day, on the basis of the count result of the information analyzing unit 55, and transmits it to the information presenting unit 23. The information presenting unit 23 presents the audience seat sales situation of the target event of the specified day, on the basis of the received audience seat sales situation information.

Thereafter, the sales situation transition presenting process ends.

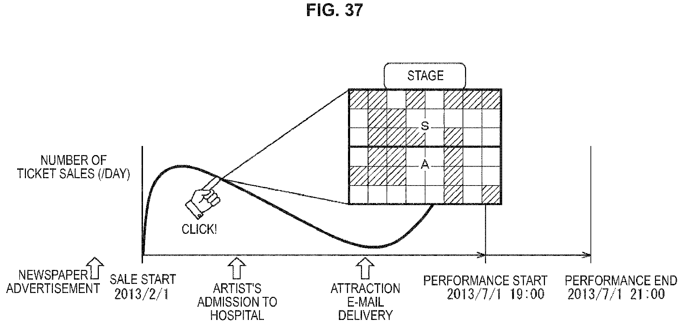

FIG. 37 illustrates an example of the screen image presented in the information presenting unit 23 in this process. In this example, in the same way as the example of FIG. 35, a graph illustrating the transition of the number of sales of the ticket of the target event on each day from the ticket sales start day to the present moment is displayed. Also, the episodes related to the target event ("newspaper advertisement", "artist's admission to hospital", attraction e-mail delivery") are displayed along the time axis of the graph. Thereby, the host or the like can easily confirm the episodes that affected the sales of the tickets.

Also, for example, when the graph is clicked, an image illustrating the sales situation of the audience seat on the clicked date, which is similar to the example of FIG. 35, pops up to be displayed. Thereby, the host or the like can easily confirm the transition of reservation of the audience seats, and for example can easily confirm attractive seats and unattractive seats.

Note that, in this pop-up display, the transition of the audience seat sales situation on or after the clicked date is replayed automatically.

### <2. Exemplary Variant>

In the following, exemplary variants of the embodiment of the present technology which are not described above will be described.

For example, using the above recommendation process, a seat can be assigned to each user at the venue of the event, or a seat can be changed, by means of an electronic ticket or the like for dynamically changing an assigned seat number.

Also, for example, when an action plan before and after the event is recommended, the recommended seat may be selected on the basis of the distance between the seat vector of the seat of the facility that is utilized in the recommended action plan and the user vector of the user, by the same process as when the recommendation of the event is performed.

Further, for example, the chemistry with the audience of the surrounding seats may be calculated using user vector, and a seat surrounded by audience of good chemistry may be recommended. Here, the audience of good chemistry is, for example, audience of similar preference, and audience who view an event in a similar manner. Thereby, for example, it is highly possible to communicate preferably with the surrounding audience through the event, and to enjoy the sense of togetherness.

Also, for example, by utilizing this, a project such as a matchmaking party through an event can be organized by locating groups of males and females of the same number who are seemingly of the same or similar preference at a predetermined area (which may be one place or a plurality of places) in the venue. Then, further, in order to deepen the communication between the groups, an action plan after the event may be recommended for those groups, by the above process.

Further, for example, the combination of the recommended seat and the user can be selected on the basis of the distance between the seat vector of the seat and the user vector of the user, by the above method, with respect to seats other than event, for example, seats of means of transportation.

### [Computer Configuration Example]

The series of processes described above can be executed by hardware but can also be executed by software. When the series of processes is executed by software, a program that constructs such software is installed into a computer. Here, the expression "computer" includes a computer in which dedicated hardware is incorporated and a general-purpose personal computer or the like that is capable of executing various functions when various programs are installed.

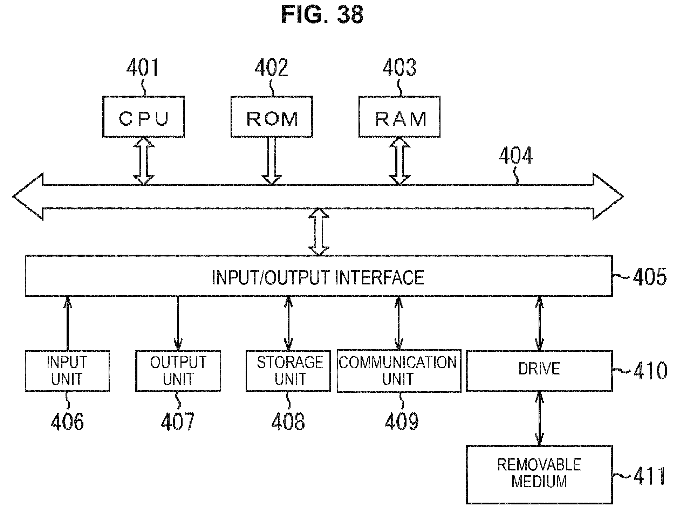

FIG. 38 is a block diagram showing an example configuration of the hardware of a computer that executes the series of processes described earlier according to a program.

In a computer, a CPU (Central Processing Unit) 401, a ROM (Read Only Memory) 402, and a RAM (Random Access Memory) 403 are mutually connected by a bus 404.

An input/output interface 405 is also connected to the bus 404. An input unit 406, an output unit 407, a storage unit 408, a communication unit 409, and a drive 410 are connected to the input/output interface 405.

The input unit 406 is configured from a keyboard, a mouse, a microphone or the like. The output unit 407 configured from a display, a speaker or the like. The storage unit 408 is configured from a hard disk, a non-volatile memory or the like. The communication unit 409 is configured from a network interface or the like. The drive 410 drives a removable medium 411 such as a magnetic disk, an optical disk, a magneto-optical disk, a semiconductor memory or the like.

In the computer configured as described above, as one example the CPU 401 loads a program stored in the storage unit 408 via the input/output interface 405 and the bus 404 into the RAM 403 and executes the program to carry out the series of processes described earlier.

As one example, the program executed by the computer (the CPU 401) may be provided by being recorded on the removable medium 411 as a packaged medium or the like. The program can also be provided via a wired or wireless transfer medium, such as a local area network, the Internet, or a digital satellite broadcast.

In the computer, by loading the removable medium 411 into the drive 410, the program can be installed into the storage unit 408 via the input/output interface 405. It is also possible to receive the program from a wired or wireless transfer medium using the communication unit 409 and install the program into the storage unit 408. As another alternative, the program can be installed in advance into the ROM 402 or the storage unit 408.

Note that the program executed by the computer may be a program in which processes are carried out in a time series in the order described in this specification or may be a program in which processes are carried out in parallel or at necessary timing, such as when the processes are called.

Further, in the present disclosure, a system has the meaning of a set of a plurality of configured elements (such as an apparatus or a module (part)), and does not take into account whether or not all the configured elements are in the same casing. Therefore, the system may be either a plurality of apparatuses, stored in separate casings and connected through a network, or a plurality of modules within a single casing.

An embodiment of the disclosure is not limited to the embodiments described above, and various changes and modifications may be made without departing from the scope of the disclosure.

For example, the present disclosure can adopt a configuration of cloud computing which processes by allocating and connecting one function by a plurality of apparatuses through a network.

Further, each step described by the above-mentioned flow charts can be executed by one apparatus or by allocating a plurality of apparatuses.

In addition, in the case where a plurality of processes are included in one step, the plurality of processes included in this one step can be executed by one apparatus or by sharing a plurality of apparatuses.

Additionally, the present technology may also be configured as below.

(1) An information processing apparatus including:
   a recommending unit configured to perform matching between a feature of a seat or area assigned to a user in an event and a feature of a user, and to select a combination of a recommended seat or area and the user.
(2) The information processing apparatus according to (1), wherein
   the recommending unit selects a combination of a recommended seat or area and a user on the basis of a distance between a seat vector which is a vector that represents a feature of a seat or area and a user vector which is a vector that represents a feature of the user.
(3) The information processing apparatus according to (2), further including:
   a presentation control unit configured to perform control to present an arrangement of seats or areas of the event to a user in such a manner that each seat or area is distinguished on the basis of the distance between the seat vector of each seat or area and the user vector of the user, when the arrangement of seats or areas of the event is presented to the user.
(4) The information processing apparatus according to (2) or (3), wherein
   the recommending unit recommends a second seat or area for a user to which a first seat or area is assigned, the second seat or area having the seat vector whose distance to the user vector of the user is smaller than the first seat or area.
(5) The information processing apparatus according to any of (2) to (4), further including:
   a seat vector generating unit configured to generate the seat vector of each seat or area, on the basis of metadata relevant to each seat or area; and
   a user vector generating unit configured to generate the user vector of each user, on the basis of metadata relevant to each user.
(6) The information processing apparatus according to (1), (2), (4), or (5), further including:
   a presentation control unit configured to control presentation of a screen image that simulates a sight from a seat or area that is recommended to a user.
(7) The information processing apparatus according to (6), wherein
   the screen image simulates how an event region which is a region at which the event is performed in a venue of the event is viewed from a seat or area that is recommended to a user, and a surrounding situation of the seat or area that is recommended to the user.
(8) The information processing apparatus according to any of (1) to (7), wherein
   the feature of the seat or area includes a feature of a user assigned preferentially to the seat or area, and
   the recommending unit selects a combination of a recommended seat or area and a user, on the basis of a feature of a user and a feature of a user assigned preferentially to each seat or area.
(9) The information processing apparatus according to any of (1) to (8), wherein
   the recommending unit further recommends a facility and seat utilized by a target user before the event or after the event, on the basis of a combination of a category that the event belongs to and a category that the target user serving as a target for recommendation belongs to.
(10) The information processing apparatus according to any of (1) to (9), wherein
   the feature of the seat or area includes at least one of a feature relevant to how an event region which is a region at which the event is performed in a venue of the event is viewed from the seat or area, a feature relevant to how a sound is heard in the seat or area, a feature relevant to an audience surrounding the seat or area, a feature relevant to an environment of the seat or area, and a feature of a user assigned preferentially to the seat or area, and
   the feature of the user includes at least one of an attribute of the user, a physical feature of the user, a feature relevant to a preference of the user, and a feature relevant to how the user views an event.
(11) The information processing apparatus according to (10), further including:
   a presentation control unit configured to classify an audience of the event into a plurality of types on the basis of at least one of attributes of the audience, physical features of the audience, features relevant to preferences of the audience, and, features relevant to how the audience views an event, and to perform control to present a distribution of the audience of audience seats of the event in a such a manner that each type is distinguished.
(12) The information processing apparatus according to (1) to (11), further including:
   a sales strategy setting unit capable of setting a sales strategy indicating whether or not to perform a recommendation to a user, with respect to each seat or area of the event,
   wherein the recommending unit recommends a seat or area that is set to be recommended to the user.
(13) The information processing apparatus according to (12), wherein
   the sales strategy setting unit is capable of setting different sales strategies between a case in which a cancellation occurs, a case in which there is a vacant seat even after a predetermined deadline, and other cases.
(14) The information processing apparatus according to any of (1) to (13), wherein
   the recommending unit further sets a price of the event and a privilege to a participant of the event, and adjusts content of a combination of a recommended seat or area, the price, and the privilege, on the basis of a preference degree of a user to the event.
(15) The information processing apparatus according to any of (1) to (14), wherein
   when the event is an event that delivers a video to an environment of a user, the recommending unit recommends a virtual seat or area that decides how an event region which is a region at which the event is performed in the video is viewed.
(16) An information processing method of an information processing apparatus, the information processing method including:
   a recommending step for performing matching between a feature of a seat or area assigned to a user in an event and a feature of a user, and selecting a combination of a recommended seat or area and the user.
(17) A program for causing a computer to execute a process including:
   a recommending step for performing matching between a feature of a seat or area assigned to a user in an event and a feature of a user, and selecting a combination of a recommended seat or area and the user.

### Reference Signs List

- 11: information processing system
- 21: recommendation system
- 22, 23: information presenting unit
- 24: ticket selling system
- 25: event information DB
- 26: audience seat sales situation DB
- 27: user profile DB
- 28: purchase history information DB
- 29: host profile DB
- 30: action plan DB
- 51: seat vector generating unit
- 52: user vector generating unit
- 53: recommending unit
- 54: sales strategy setting unit
- 55: information analyzing unit
- 56: presentation control unit

## Claims

1. An information processing apparatus comprising:
a recommending unit configured to perform matching between a feature of a seat or area assigned to a user in an event and a feature of a user, and to select a combination of a recommended seat or area and the user.

2. The information processing apparatus according to claim 1, wherein
the recommending unit selects a combination of a recommended seat or area and a user on the basis of a distance between a seat vector which is a vector that represents a feature of a seat or area and a user vector which is a vector that represents a feature of the user.

3. The information processing apparatus according to claim 2, further comprising:
a presentation control unit configured to perform control to present an arrangement of seats or areas of the event to a user in such a manner that each seat or area is distinguished on the basis of the distance between the seat vector of each seat or area and the user vector of the user, when the arrangement of seats or areas of the event is presented to the user.

4. The information processing apparatus according to claim 2, wherein
the recommending unit recommends a second seat or area for a user to which a first seat or area is assigned, the second seat or area having the seat vector whose distance to the user vector of the user is smaller than the first seat or area.

5. The information processing apparatus according to claim 2, further comprising:
a seat vector generating unit configured to generate the seat vector of each seat or area, on the basis of metadata relevant to each seat or area; and
a user vector generating unit configured to generate the user vector of each user, on the basis of metadata relevant to each user.

6. The information processing apparatus according to claim 1, further comprising:
a presentation control unit configured to control presentation of an image that simulates a sight from a seat or area that is recommended to a user.

7. The information processing apparatus according to claim 6, wherein
the image simulates how an event region which is a region at which the event is performed in a venue of the event is viewed from a seat or area that is recommended to a user, and a surrounding situation of the seat or area that is recommended to the user.

8. The information processing apparatus according to claim 1, wherein
the feature of the seat or area includes a feature of a user assigned preferentially to the seat or area, and
the recommending unit selects a combination of a recommended seat or area and a user, on the basis of a feature of a user and a feature of a user assigned preferentially to each seat or area.

9. The information processing apparatus according to claim 1, wherein
the recommending unit further recommends a facility and seat utilized by a target user before the event or after the event, on the basis of a combination of a category that the event belongs to and a category that the target user serving as a target for recommendation belongs to.

10. The information processing apparatus according to claim 1, wherein
the feature of the seat or area includes at least one of a feature relevant to how an event region which is a region at which the event is performed in a venue of the event is viewed from the seat or area, a feature relevant to how a sound is heard in the seat or area, a feature relevant to an audience surrounding the seat or area, a feature relevant to an environment of the seat or area, and a feature of a user assigned preferentially to the seat or area, and
the feature of the user includes at least one of an attribute of the user, a physical feature of the user, a feature relevant to a preference of the user, and a feature relevant to how the user views an event.

11. The information processing apparatus according to claim 10, further comprising:
a presentation control unit configured to classify an audience of the event into a plurality of types on the basis of at least one of attributes of the audience, physical features of the audience, features relevant to preferences of the audience, and, features relevant to how the audience views an event, and to perform control to present a distribution of the audience of audience seats of the event in a such a manner that each type is distinguished.

12. The information processing apparatus according to claim 1, further comprising:
a sales strategy setting unit capable of setting a sales strategy indicating whether or not to perform a recommendation to a user, with respect to each seat or area of the event,
wherein the recommending unit recommends a seat or area that is set to be recommended to the user.

13. The information processing apparatus according to claim 12, wherein
the sales strategy setting unit is capable of setting different sales strategies between a case in which a cancellation occurs, a case in which there is a vacant seat even after a predetermined deadline, and other cases.

14. The information processing apparatus according to claim 1, wherein
the recommending unit further sets a price of the event and a privilege to a participant of the event, and adjusts content of a combination of a recommended seat or area, the price, and the privilege, on the basis of a preference degree of a user to the event.

15. The information processing apparatus according to claim 1, wherein
when the event is an event that delivers a video to an environment of a user, the recommending unit recommends a virtual seat or area that decides how an event region which is a region at which the event is performed in the video is viewed.

16. An information processing method of an information processing apparatus, the information processing method comprising:
a recommending step for performing matching between a feature of a seat or area assigned to a user in an event and a feature of a user, and selecting a combination of a recommended seat or area and the user.

17. A program for causing a computer to execute a process comprising:
a recommending step for performing matching between a feature of a seat or area assigned to a user in an event and a feature of a user, and selecting a combination of a recommended seat or area and the user.
